(19) **Europäisches Patentamt / European Patent Office / Office européen des brevets**

(11) **EP 4 181 446 A1**

(12) # EUROPEAN PATENT APPLICATION
published in accordance with Art. 153(4) EPC

(43) Date of publication:
**17.05.2023 Bulletin 2023/20**

(21) Application number: **21849714.7**

(22) Date of filing: **20.07.2021**

(51) International Patent Classification (IPC):
***H04L 5/00*** *(2006.01)*

(52) Cooperative Patent Classification (CPC):
**H04B 7/06; H04L 5/00; H04L 25/02**

(86) International application number:
**PCT/CN2021/107349**

(87) International publication number:
**WO 2022/022331 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.07.2020 CN 202010732208**

(71) Applicant: **Huawei Technologies Co., Ltd.**
**Shenzhen, Guangdong 518129 (CN)**

(72) Inventors:
- **YUAN, Yiling**
  **Shenzhen, Guangdong 518129 (CN)**
- **GE, Shibin**
  **Shenzhen, Guangdong 518129 (CN)**
- **JIN, Huangping**
  **Shenzhen, Guangdong 518129 (CN)**
- **BI, Xiaoyan**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND APPARATUS FOR ACQUIRING CHANNEL PARAMETER**

(57)      This application discloses a channel parameter obtaining method and an apparatus, including: A network device sends a precoded reference signal and indication information to user equipment, the precoded reference signal is generated on P ports by mapping K virtual ports to each of the P ports through beamforming, the K virtual ports are associated with K selected frequency domain bases, K is an integer greater than 1, the indication information indicates the K selected frequency domain bases, and the user equipment obtains a linear superposition coefficient based on the precoded reference signal and the indication information, and sends the linear superposition coefficient to the network device. According to the method disclosed in embodiments of this application, a plurality of angle-delay pairs are loaded on one port. This reduces a limitation of a quantity of reference signal ports of the network device on a quantity of angle-delay pairs that can be loaded, improves efficiency of obtaining a channel parameter by the network device, and improves channel estimation accuracy.

FIG. 2A

EP 4 181 446 A1

## Description

This application claims priority to Chinese Patent Application No. 202010732208.8, filed with the China National Intellectual Property Administration on July 27, 2020 and entitled "CHANNEL PARAMETER OBTAINING METHOD AND APPARATUS", which is incorporated herein by reference in its entirety.

## TECHNICAL FIELD

This application relates to the field of communication technologies, and in particular, to a channel parameter obtaining method and an apparatus.

## BACKGROUND

A 5th generation (5th Generation, 5G) system needs to have higher performance and efficiency than 4G, and has higher requirements on system capacities, spectral efficiency, and the like. A massive multiple-input multiple-output (multiple-input multiple output, MIMO) system is a key technology in the 5G communication system. A large quantity of antennas are disposed on a network device side, so that a system throughput of a 5G network can be multiplied. In MIMO communication, how to obtain uplink channel state information (channel state information, CSI) and downlink CSI is important for improving communication quality of the MIMO communication. In a time division duplex (time division duplex, TDD) system, an uplink channel and a downlink channel have strict reciprocity, and a network device may learn of downlink CSI based on uplink CSI. However, in a frequency division duplex (frequency division duplex, FDD) system, because a frequency domain resource for uplink transmission is different from a frequency domain resource for downlink transmission, an uplink channel and a downlink channel no longer have strict reciprocity. Therefore, how to learn of downlink CSI needs to be resolved urgently.

In the FDD system, because physical locations of a network device and a terminal device are fixed, the uplink channel and the downlink channel have partial reciprocity. For example, the uplink channel and the downlink channel have reciprocity of multipath angles and delays. Therefore, in a conventional solution, a network device may reconstruct downlink CSI based on prior information (namely, a multipath angle and delay) of an uplink channel and supplementary information fed back by a terminal device. Specifically, the network device generates precoding based on the angle and the delay, and uses the precoding to encode a downlink signal. The terminal device receives the encoded downlink signal, and generates a weighting coefficient based on the encoded downlink signal. The network receives the weighting coefficient, and determines the downlink CSI based on the weighting coefficient and with reference to the multipath angle and delay.

However, in the conventional solution, the weighting coefficient fed back by the terminal device is in a one-to-one correspondence with a quantity of ports for sending precoding by the network device. Consequently, a quantity of weighting coefficients that can be obtained by the network device is limited by the quantity of ports, and a quantity of weighting coefficients used by the network device to calculate the downlink CSI is small. This reduces channel estimation accuracy.

## SUMMARY

Embodiments of this application provide a channel parameter obtaining method and an apparatus, to reduce a limitation of a quantity of reference signal ports of a network device on a quantity of angle-delay pairs that can be loaded, improve efficiency of obtaining a channel parameter by the network device, and improve channel estimation accuracy.

According to a first aspect, a channel parameter obtaining method is provided. The method includes: A network device sends a precoded reference signal and indication information, where the precoded reference signal is generated on P ports by mapping K virtual ports to each of the P ports through beamforming, the K virtual ports are associated with K selected frequency domain bases, the indication information indicates the K selected frequency domain bases, K is an integer greater than 1, and the P ports are precoded reference signal CSI-RS ports of the network device and user equipment; and the network device receives a linear superposition coefficient sent by the user equipment, where the linear superposition coefficient corresponds to M frequency domain bases in the K selected frequency domain bases and corresponds to T ports in the P ports, where $1 \leq T \leq P$, and $1 \leq M \leq K$.

In this embodiment of this application, the network device maps, to one CSI-RS port through beamforming, K virtual ports respectively corresponding to angle-delay pairs, to generate a precoded reference signal corresponding to the port and the K angle-delay pairs, so that precoded reference signals corresponding to a plurality of angle-delay pairs are sent through one port. This reduces port quantity overheads of reference signals sent by the network device, avoids a limitation of a quantity of reference signal ports of the network device on a quantity of angle-delay pairs that can be loaded by the network device on a reference signal, improves efficiency of obtaining a channel parameter by the network device, and improves channel estimation accuracy.

Optionally, the indication information further indicates T and/or M.

Optionally, K frequency domain bases of each port correspond to K angle-delay pairs, and that the precoded reference signal is generated on P ports by mapping K virtual ports to each of the P ports through beamforming includes: obtaining a first weight of each of the K angle-delay pairs in an $n^{th}$ frequency domain unit, where the $n^{th}$ frequency domain unit is any one of frequency domain units for sending the precoded reference signal; obtaining a space-frequency weight of the $n^{th}$ frequency domain unit on each port based on K first weights and the K frequency domain bases that correspond to each port, so that the K virtual ports are mapped to each port through beamforming; and performing precoding based on the space-frequency weight of the $n^{th}$ frequency domain unit and a downlink signal, to obtain the precoded reference signal corresponding to each port.

Optionally, the receiving a linear superposition coefficient sent by the user equipment includes: receiving the linear superposition coefficients in a port sequence first and then a frequency domain basis sequence; or receiving the linear superposition coefficients in a frequency domain basis sequence first and then a port sequence.

According to a second aspect, a channel parameter obtaining method is provided. The method includes: User equipment receives indication information and a precoded reference signal, where the precoded reference signal is generated on P ports by mapping K virtual ports to each of the P ports through beamforming, the K virtual ports are associated with K selected frequency domain bases, K is an integer greater than 1, and the P ports are precoded reference signal CSI-RS ports of a network device and the user equipment; the user equipment obtains a linear superposition coefficient based on the indication information and the precoded reference signal, where the linear superposition coefficient corresponds to M frequency domain bases in the K selected frequency domain bases and corresponds to T ports in the P ports, where $1 \le T \le P$, and $1 \le M \le K$; and the user equipment sends the linear superposition coefficient to the network device.

Optionally, the user equipment is further configured to determine T and/or M based on the indication information.

Optionally, the obtaining a linear superposition coefficient based on the indication information and the precoded reference signal includes: determining the K selected frequency domain bases based on the indication information, and determining, based on the precoded reference signal, the T ports and the M frequency domain bases corresponding to each port that are for obtaining the linear superposition coefficient; obtaining an equivalent channel of each of the T ports that is in the $n^{th}$ frequency domain unit based on the precoded reference signal; and obtaining, through calculation based on the equivalent channel and an index of the M frequency domain bases, linear superposition coefficients on the M frequency domain bases corresponding to each of the T ports.

Optionally, the sending the linear superposition coefficient to the network device includes: sending the linear superposition coefficients in a port sequence first and then a frequency domain basis sequence; or sending the linear superposition coefficients in a frequency domain basis sequence first and then a port sequence.

Optionally, the sending the linear superposition coefficient to the network device includes: sending the linear superposition coefficient to the network device by sending a codebook, and specifically includes: sending the codebook to the network device, where the codebook includes a port selection matrix W1, a frequency domain matrix $W_f$, and a linear superposition coefficient matrix $\tilde{W}_2$, a dimension corresponding to W1 is P*T, $W_f$ includes M columns selected from K columns in a discrete Fourier transform DFT matrix, and $\tilde{W}_2$ is a matrix including T*M linear superposition coefficients.

According to a third aspect, a communication apparatus is provided, and used in a network device. The network device includes a sending module and a receiving module. The sending module is configured to send a precoded reference signal and indication information, where the precoded reference signal is generated on P ports by mapping K virtual ports to each of the P ports through beamforming, the K virtual ports are associated with K selected frequency domain bases, the indication information indicates the K selected frequency domain bases, K is an integer greater than 1, and the P ports are precoded reference signal CSI-RS ports of the network device and user equipment.

The receiving module is configured to receive a linear superposition coefficient sent by the user equipment. The linear superposition coefficient corresponds to M frequency domain bases in the K selected frequency domain bases and corresponds to T ports in the P ports, where $1 \le T \le P$, and $1 \le M \le K$.

Optionally, the indication information further indicates T and/or M.

Optionally, the K frequency domain bases of each port correspond to K angle-delay pairs. The apparatus further includes a processing module, configured to: obtain a first weight of each of the K angle-delay pairs in an $n^{th}$ frequency domain unit, where the $n^{th}$ frequency domain unit is any one of frequency domain units for sending the precoded reference signal; obtain a space-frequency weight of the $n^{th}$ frequency domain unit on each port based on K first weights and the K frequency domain bases that correspond to each port, so that the K virtual ports are mapped to each port through beamforming; and perform precoding based on the space-frequency weight of the $n^{th}$ frequency domain unit and a downlink signal, to obtain the precoded reference signal corresponding to each port.

Optionally, the receiving module is specifically configured to: receive the linear superposition coefficients in a port sequence first and then a frequency domain basis sequence; or receive the linear superposition coefficients in a frequency domain basis sequence first and then a port sequence.

According to a fourth aspect, a communication apparatus is provided, and used in user equipment. The user equipment includes a receiving module, a processing module, and a sending module. The receiving module is configured to receive indication information and a precoded reference signal, where the precoded reference signal is generated on P ports by mapping K virtual ports to each of the P ports through beamforming, the K virtual ports are associated with K selected frequency domain bases, K is an integer greater than 1, and the P ports are precoded reference signal CSI-RS ports of a network device and the user equipment.

The processing module is configured to obtain a linear superposition coefficient based on the indication information and the precoded reference signal. The linear superposition coefficient corresponds to M frequency domain bases in the K selected frequency domain bases and corresponds to T ports in the P ports, where $1 \leq T \leq P$, and $1 \leq M \leq K$.

The sending module is configured to send the linear superposition coefficient to the network device.

Optionally, the processing module is further configured to determine T and/or M based on the indication information.

Optionally, the processing module is specifically configured to: determine the K selected frequency domain bases based on the indication information, and determine, based on the precoded reference signal, the T ports and the M frequency domain bases corresponding to each port that are for obtaining the linear superposition coefficient; obtain an equivalent channel of each of the T ports that is in the $n^{th}$ frequency domain unit based on the precoded reference signal; and obtain, through calculation based on the equivalent channel and an index of the M frequency domain bases, the linear superposition coefficient on the M frequency domain bases corresponding to each of the T ports.

Optionally, the sending module is specifically configured to: send the linear superposition coefficients in a port sequence first and then a frequency domain basis sequence; or send the linear superposition coefficients in a frequency domain basis sequence first and then a port sequence.

Optionally, the sending module is configured to send the linear superposition coefficient to the network device by sending a codebook, and is specifically configured to: send the codebook to the network device, where the codebook includes a port selection matrix W1, a frequency domain matrix $W_f$, and a linear superposition coefficient matrix $\tilde{W}_2$, a dimension corresponding to W1 is P*T, $W_f$ includes M columns selected from K columns in a discrete Fourier transform DFT matrix, and $\tilde{W}_2$ is a matrix including T*M linear superposition coefficients.

According to a fifth aspect, a communication apparatus is provided. The apparatus includes at least one processor. The at least one processor is coupled to at least one memory.

The at least one processor is configured to execute a computer program or instructions stored in the at least one memory, so that the apparatus performs the method according to any implementation of the first aspect or the method according to any implementation of the second aspect.

The apparatus may be a network device, or may be a chip included in the network device. The function of the communication apparatus may be implemented by hardware, or may be implemented by hardware by executing corresponding software. The hardware or the software includes one or more modules corresponding to the function.

The apparatus may be user equipment, or may be a chip included in the user equipment. The function of the communication apparatus may be implemented by hardware, or may be implemented by hardware by executing corresponding software. The hardware or the software includes one or more modules corresponding to the function.

According to a sixth aspect, an embodiment of this application provides a chip system. The chip system includes a processor, and the processor is coupled to a memory. The memory is configured to store a program or instructions. When the program or the instructions is/are executed by the processor, the chip system is enabled to implement the method according to any one of the first aspect or the possible implementations of the first aspect, or perform the method according to any one of the second aspect or the possible implementations of the second aspect.

Optionally, the chip system further includes an interface circuit. The interface circuit is configured to exchange code instructions with the processor.

Optionally, there may be one or more processors in the chip system, and the processor may be implemented by hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be separate from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a seventh aspect, an embodiment of this application provides a computer-readable storage medium. The computer-readable storage medium stores a computer program or instructions. When the computer program or the instructions is/are executed, a computer is enabled to perform the method according to any one of the first aspect or the possible implementations of the first aspect, or the method according to any one of the second aspect or the possible implementations of the second aspect.

According to an eighth aspect, an embodiment of this application provides a computer program product. When a computer reads and executes the computer program product, the computer is enabled to perform the method according to any one of the first aspect or the possible implementations of the first aspect, or the method according to any one of the second aspect or the possible implementations of the second aspect.

According to a ninth aspect, an embodiment of this application provides a communication system. The communication system includes the foregoing one or more network devices and/or user equipment.

**BRIEF DESCRIPTION OF DRAWINGS**

To describe technical solutions in embodiments of this application or the conventional technology more clearly, the following briefly describes the accompanying drawings used in description of embodiments.

FIG. 1 is a schematic diagram of a communication system according to an embodiment of this application;

FIG. 2A is a flowchart of a channel parameter obtaining method according to an embodiment of this application;

FIG. 2B is a schematic diagram of a communication scenario according to an embodiment of this application;

FIG. 2C is a schematic diagram of a CSI obtaining process based on FDD partial reciprocity according to an embodiment of this application;

FIG. 2D is a schematic diagram of precoding based on an angle-delay pair according to an embodiment of this application;

FIG. 2E is a schematic diagram of an equivalent process of a CSI obtaining solution based on FDD partial reciprocity according to an embodiment of this application;

FIG. 2F is a schematic diagram of loading a plurality of angle-delay pairs to a same port according to an embodiment of this application;

FIG. 3 is a schematic block diagram of a communication apparatus according to an embodiment of this application;

FIG. 4 is a schematic block diagram of another communication apparatus according to an embodiment of this application;

FIG. 5 is a schematic diagram of a structure of a communication apparatus according to an embodiment of this application;

FIG. 6 is a schematic diagram of a structure of user equipment according to an embodiment of this application;

FIG. 7 is a schematic diagram of a structure of a communication apparatus according to an embodiment of this application;

FIG. 8 is a schematic diagram of a structure of a communication apparatus according to an embodiment of this application; and

FIG. 9 is a schematic diagram of a structure of a network device according to an embodiment of this application.

**DESCRIPTION OF EMBODIMENTS**

The following describes the technical solutions in embodiments of this application with reference to the accompanying drawings in embodiments of this application.

The technical solutions in embodiments of this application may be applied to various communication systems, such as a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G mobile communication system, or a new radio access technology (new radio Access Technology, NR). The 5G mobile communication system may include a non-standalone (non-standalone, NSA) communication system and/or a standalone (standalone, SA) communication system.

The technical solutions provided in this application may also be applied to a machine type communication (machine type communication, MTC) network, a long term evolution-machine type communication technology (Long Term Evolution-machine, LTE-M), a device-to-device (device-to-device, D2D) network, a machine to machine (machine to machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

The technical solutions provided in this application may be further applied to a future communication system, for example, a sixth generation mobile communication system. This is not limited in this application.

In embodiments of this application, the network device may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (TRP or TP) in a 5G system such as an NR system, may be one antenna panel or a group (including a plurality of antenna panels) of antenna panels of a base station in a 5G system, or may be a network node, such as a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and a terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

In embodiments of this application, the terminal device may also be referred to as user equipment (user equipment, UE), an access terminal device, a subscriber unit, a subscriber station, a mobile station, a remote station, a remote terminal device, a mobile device, a user terminal device, a terminal device, a wireless communication device, a user agent, or a user apparatus.

The terminal device may be a device that provides voice/data connectivity for a user, for example, a handheld device or a vehicle-mounted device having a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal device in industrial control (industrial control), a wireless terminal device in self-driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement all or some functions without depending on smartphones, such as smart watches or smart glasses, and devices that focus on only one type of application function and need to be used with other devices such as smartphones, such as various smart bands or smart jewelry for monitoring physical signs.

In addition, the terminal device may alternatively be a terminal device in an internet of things (internet of things, IoT) system. IoT is an important part in future development of information technologies. A main technical feature of the IoT is to connect things to a network by using a communication technology, to implement an intelligent network for human-machine interconnection and thing-thing interconnection. The IoT technology can implement massive connections, deep coverage, and power saving for terminal devices by using, for example, a narrow band (narrow band) NB technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

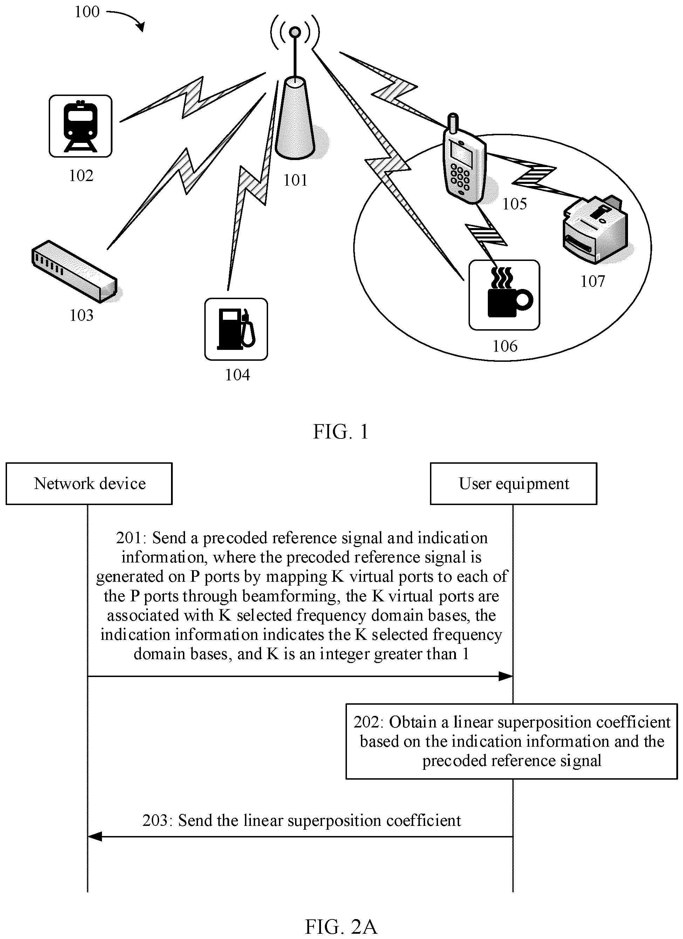

To facilitate understanding of embodiments of this application, a communication system used in a method according to embodiments of this application is first described in detail with reference to FIG. 1. FIG. 1 is a schematic diagram of a communication system 100 used in a method according to an embodiment of this application. As shown in the figure, the communication system 100 may include at least one network device, for example, a network device 101 in a 5G system shown in FIG. 1. The communication system 100 may further include at least one terminal device, for example, terminal devices 102 to 107 shown in FIG. 1. The terminal devices 102 to 107 may be movable or fixed. The network device 101 may communicate with one or more of the terminal devices 102 to 107 through a radio link. Each network device may provide communication coverage for a particular geographic area, and may communicate with a terminal device located in the coverage area. For example, the network device may send configuration information to the terminal device, and the terminal device may send uplink data to the network device based on the configuration information. For another example, the network device may send downlink data to the terminal device. Therefore, a communication system includes the network device 101 and the terminal devices 102 to 107 in FIG. 1.

Optionally, the terminal devices may directly communicate with each other. For example, the direct communication between the terminal devices may be implemented by using a D2D technology or the like. As shown in the figure, the terminal devices 105 and 106 may directly communicate with each other by using the D2D technology, and the terminal devices 105 and 107 may directly communicate with each other by using the D2D technology. The terminal devices 106 and 107 may separately or simultaneously communicate with the terminal device 105.

The terminal devices 105 to 107 may alternatively communicate with the network device 101 separately. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 106.

It should be understood that, by way of example, FIG. 1 shows one network device, a plurality of terminal devices, and communication links between the communication devices. Optionally, the communication system 100 may include a plurality of network devices, and coverage of each network device may include another quantity of terminal devices, for example, more or fewer terminal devices. This is not limited in this application.

A plurality of antennas may be configured for each of the foregoing communication devices, for example, the network device 101 and the terminal devices 102 to 107 in FIG. 1. The plurality of antennas may include at least one transmit antenna configured to send a signal and at least one receive antenna configured to receive a signal. In addition, each communication device additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device and the terminal device may communicate with each other by using a multi-antenna technology.

Optionally, the wireless communication system 100 may further include another network entity, for example, a network controller or a mobility management entity. This is not limited in this embodiment of this application.

For ease of understanding embodiments of this application, the following briefly describes a process of processing a downlink signal at a physical layer before the downlink signal is sent. It should be understood that the process of processing the downlink signal described below may be performed by a network device, or may be performed by a chip configured in the network device. For ease of description, the network device and the chip are collectively referred to as a network device below.

The network device may process a codeword (codeword) on a physical channel. The codeword may be a coded bit obtained through coding (for example, including channel coding). The codeword is scrambled (scrambling) to generate a scrambled bit. Modulation mapping (modulation mapping) is performed on the scrambled bit, to obtain a modulated symbol. The modulated symbol is mapped to a plurality of layers (layers) through layer mapping (layer mapping). The layer is also referred to as a transport layer. The modulated symbol on which the layer mapping is performed is precoded (precoding), to obtain a precoded signal. The precoded signal is mapped to a plurality of resource elements (resource elements, REs) through RE mapping. These REs are then transmitted to the outside through an antenna port (antenna port) after orthogonal frequency division multiplexing (orthogonal frequency division multiplexing, OFDM) modulation is performed on the REs.

It should be understood that the process of processing the downlink signal described above is merely an example for description, and shall not constitute any limitation on this application. For a specific process of processing a downlink signal, refer to a conventional technology. For brevity, detailed descriptions of the specific process are omitted herein.

To help understand embodiments of this application, the following briefly describes terms in embodiments of this application.

1. Precoding technology: When a channel state is known, the network device may process a to-be-sent signal by using a precoding matrix that matches the channel state, so that a precoded to-be-sent signal adapts to a channel, thereby reducing complexity of eliminating inter-channel impact by a receiving device. Therefore, after the to-be-sent signal is precoded, received signal quality (for example, a signal to interference plus noise ratio (signal to interference plus noise ratio, SINR)) is improved. A sending device and a plurality of receiving devices can implement transmission on a same time-frequency resource by using a precoding technology. That is, multi-user multiple-input multiple-output (multi-user multiple-input multiple-output, MU-MIMO) is implemented. It should be understood that related descriptions of the precoding technology in this specification are merely examples for ease of understanding, and are not intended to limit the protection scope of embodiments of this application. In a specific implementation process, the sending device may perform precoding in another manner. For example, when channel information (for example, but not limited to, a channel matrix) cannot be learned of, precoding is performed by using a preset precoding matrix or through weighting. For brevity, specific content thereof is not described in this specification.

2. Channel reciprocity: In some communication modes such as TDD, signals are transmitted on uplink and downlink channels through a same frequency domain resource but different time domain resources. Within a short time period (for example, a coherence time period of channel propagation), it may be considered that the signals on the uplink and downlink channels suffer same channel fading. This is reciprocity between the uplink and downlink channels. Based on the reciprocity between the uplink and downlink channels, the network device may measure the uplink channel based on an uplink reference signal (reference signal, RS), for example, a sounding reference signal (sounding reference signal, SRS). In addition, the downlink channel may be estimated based on the uplink channel, so that a precoding matrix used for downlink transmission can be determined.

However, in some other communication modes such as FDD, because a band interval between uplink and downlink channels is far greater than a coherence bandwidth, there is no complete reciprocity between the uplink and downlink channels, and a precoding matrix for downlink transmission that is determined by using the uplink channel may not adapt to the downlink channel. However, in the FDD mode, the uplink and downlink channels still have partial reciprocity, for example, angle reciprocity and delay reciprocity. Therefore, an angle and a delay may also be referred to as reciprocity parameters.

When a signal is transmitted through a radio channel, the signal may arrive at a receive antenna through a plurality of paths from a transmit antenna. A multipath delay results in frequency selective fading, namely, a change in a frequency domain channel. The delay is transmission time of a radio signal on different transmission paths, is determined by a distance and a speed, and is irrelevant to a frequency domain of the radio signal. When a signal is transmitted on different transmission paths, there are different transmission delays due to different distances. Because physical locations of the network device and a terminal device are fixed, multipath distribution of the uplink and downlink channels is the same in terms of the delay. Therefore, delays on the uplink and downlink channels in the FDD mode may be considered to be the same, in other words, reciprocal.

In addition, an angle may be an angle of arrival (angle of arrival, AOA) at which a signal arrives at the receive antenna through a radio channel, or may be an angle of departure (angle of departure, AOD) at which a signal is transmitted through the transmit antenna. In embodiments of this application, the angle may be an angle of arrival at which an uplink signal arrives at the network device, or may be an angle of departure at which the network device transmits a downlink signal. Due to reciprocity of transmission paths of the uplink and downlink channels on different frequencies, an angle of arrival of the uplink reference signal and an angle of departure of a downlink reference signal may be considered to be reciprocal.

In embodiments of this application, each angle may be represented by using one angle vector. Each delay may be represented by a delay vector. Therefore, in embodiments of this application, one angle vector may represent one angle, and one delay vector may represent one delay.

3. Reference signal (reference signal, RS) and precoded reference signal: The reference signal may also be referred to as a pilot (pilot), a reference sequence, or the like. In embodiments of this application, the reference signal may be a reference signal used for channel measurement. For example, the reference signal may be a channel state information reference signal (channel state information reference signal, CSI-RS) used for measuring a downlink channel, or may be an SRS used for measuring an uplink channel. It should be understood that the foregoing listed reference signals are merely examples, and should not constitute any limitation on this application. This application does not exclude a possibility of defining another reference signal in a future protocol to implement a same or similar function.

A precoded reference signal may be a reference signal obtained by precoding the reference signal. The precoding may specifically include beamforming (beamforming) and/or phase rotation. The beamforming may be implemented, for example, by precoding a downlink reference signal based on one or more angle vectors, and the phase rotation may be implemented, for example, by precoding a downlink reference signal based on one or more delay vectors.

In embodiments of this application, for ease of distinguishing and description, a reference signal obtained through precoding, for example, beamforming and/or phase rotation, is referred to as a precoded reference signal; and a reference signal that is not precoded is referred to as a reference signal for short.

In embodiments of this application, the precoding a downlink reference signal based on one or more angle vectors may also be referred to as loading the one or more angle vectors to the downlink reference signal to implement the beamforming. The precoding a downlink reference signal based on one or more delay vectors may also be referred to as loading the one or more delay vectors to the downlink reference signal to implement the phase rotation.

4. Port (port): The port may include a transmit port and a receive port.

The transmit port may be understood as a virtual antenna identified by a receiving device.

Optionally, the port may be a transmit antenna port. For example, a reference signal of each transmit antenna port may be a non-precoded reference signal. The transmit antenna port may be an actually independent sending unit (transceiver unit, TxRU).

Optionally, the port may alternatively be a port obtained through beamforming. For example, a reference signal of each port may be a precoded reference signal obtained by precoding a reference signal based on one angle vector. It may be understood that, if beamforming is performed on a reference signal, a quantity of ports may be a quantity of precoded reference signal ports. The quantity of precoded reference signal ports may be less than a quantity of transmit antenna ports.

Optionally, the port may alternatively be a port obtained through phase rotation. For example, a reference signal of each port may be a precoded reference signal that is precoded based on a delay vector and that is sent through one transmit antenna port. The port may also be referred to as a port for the precoded reference signal.

Optionally, the port may alternatively be a port obtained through beamforming and phase rotation. For example, a reference signal of each port may be a precoded reference signal obtained by precoding a reference signal based on one angle vector and one delay vector. The port may also be referred to as a port for the precoded reference signal.

The reference signal of each port may be transmitted in one or more frequency domain units.

In the following embodiments, when the transmit antenna port is involved, the quantity of transmit antenna ports may be a quantity of ports on which no space domain precoding is performed, that is, a quantity of actually independent sending units. When the port is involved, in different embodiments, the port may be a transmit antenna port, or may be a precoded reference signal port. A specific meaning expressed by the port may be determined based on a specific embodiment. For ease of differentiation, the precoded reference signal port is referred to as a reference signal port below.

The receive port may be understood as a receive antenna of the receiving device. For example, in downlink transmission, the receive port may be a receive antenna of a terminal device.

5. Angle vector: The angle vector may be understood as a precoding vector used to perform beamforming on a reference signal. Through the beamforming, a reference signal transmitted by a sending device may have specific spatial directivity. Therefore, a process of precoding the reference signal based on the angle vector may also be considered as a space domain (or referred to as space domain for short) precoding process. The angle vector may also be referred to as a space domain vector, a beam (beam) vector, or the like.

When a quantity C of angle vectors is less than a quantity D of transmit antenna ports in one polarization direction, antenna port dimension reduction may be implemented through the space domain precoding, to reduce pilot overheads, where $C>1$, $D\geq1$, and both C and D are integers.

The angle vector may be a vector whose length is D.

Optionally, the angle vector is a discrete Fourier transform (Discrete Fourier Transform, DFT) vector. The DFT vector may be a vector in a DFT matrix.

Optionally, the angle vector is a conjugate transpose vector of a DFT vector. The DFT conjugate transpose vector may be a column vector in a conjugate transpose matrix of a DFT matrix.

Optionally, the angle vector is an oversampled DFT vector. The oversampled DFT vector may be a vector in an oversampled DFT matrix.

For ease of description, the angle vector is denoted as $\mathbf{a}(\theta_k)$ below.

In downlink transmission, because a reference signal to which the angle vector is loaded may be transmitted to a terminal device through a downlink channel, a channel measured by the terminal device based on a received precoded reference signal is equivalent to a channel to which the angle vector is loaded. For example, a downlink channel **V** to which the angle vector $\mathbf{a}(\theta_k)$ is loaded may be represented by $\mathbf{Va}(\theta_k)$.

It is assumed that a single-polarized antenna is configured for the sending device, a quantity of transmit antenna ports is D, and a quantity of frequency domain units is E, where E≥1, and E is an integer. In this case, for one receive port of a receiving device, a channel estimated based on a received reference signal may be an E×D-dimensional matrix. If space domain precoding is performed on a reference signal based on one angle vector, the angle vector may be loaded to the reference signal. Because the angle vector is a D×1-dimensional angle vector, for one receive port of the receiving device, a channel estimated based on a precoded reference signal may be an E×1 channel. In addition, on each receive port and in each frequency domain unit, a channel estimated by the terminal device based on the received precoded reference signal may be a 1 × 1-dimensional channel.

It should be understood that, the angle vector is a form provided in this application for representing the angle. The angle vector is named only for ease of distinguishing from the delay, and should not constitute any limitation on this application. This application does not exclude a possibility of defining another name in a future protocol to represent a same or similar meaning.

6. Delay vector: The delay vector may also be referred to as a frequency domain vector The delay vector is a vector that may indicate a change rule of a channel in frequency domain. As described above, the multipath delay results in the frequency selective fading. It can be learned from Fourier transform that a time delay of a signal in time domain may be equivalent to a phase gradient in frequency domain.

Because a phase change of a channel in each frequency domain unit is related to a delay, a phase change rule of the channel in each frequency domain unit may be indicated by the delay vector In other words, the delay vector may indicate a delay characteristic of the channel.

Precoding a reference signal based on the delay vector may essentially mean performing phase rotation on each frequency domain unit in frequency domain based on an element in the delay vector, to pre-compensate, by using a precoded reference signal, a frequency selective characteristic caused by the multipath delay. Therefore, a process of precoding the reference signal based on the delay vector may be considered as a frequency domain precoding process.

Precoding a reference signal based on different delay vectors is equivalent to performing phase rotation on each frequency domain unit of a channel based on the different delay vectors. In addition, different resources (for example, resource elements (resource elements, REs)) in a same frequency domain unit may have different phase rotation angles because of different loaded delay vectors. To distinguish between different delays, a network device may separately precode the reference signal based on each of L delay vectors.

Optionally, the delay vector is obtained from a DFT matrix.

For ease of description, the delay vector is denoted as $\mathbf{b}(\tau_l)$ below.

In embodiments of this application, for ease of understanding, a specific process of performing frequency domain precoding on a reference signal is described by using a resource block (resource block, RB) as an example of the frequency domain unit. For example, when an RB is used as an example of a frequency domain unit, it may be considered that each frequency domain unit includes only one RB used to carry a reference signal. Actually, each frequency domain unit may include one or more RBs (for example, a subband is used as an example of a frequency domain unit) carrying the reference signal. When each frequency domain unit includes a plurality of RBs carrying the reference signal, a network device may load the delay vector to the plurality of RBs carrying the reference signal in each frequency domain unit.

In downlink transmission, because a reference signal to which the delay vector is loaded may be transmitted to a terminal device through a downlink channel, a channel measured by the terminal device based on a received precoded reference signal is equivalent to a channel to which the delay vector is loaded. If frequency domain precoding is performed on a reference signal based on a delay vector whose length is N, N elements in the delay vector may be respectively loaded to reference signals carried on the N RBs. For example, a channel $\mathbf{V}^{(n)}$ that is on an $n^{th}$ RB and to which an $n^{th}$ element in the delay vector is loaded may be represented by $\mathbf{V}^{(n)}e^{j2\pi f_n\tau_l}$.

It should be noted that, the frequency domain precoding may be performed on the reference signal based on the delay vector before or after resource mapping. This is not limited in this application.

In addition, it is assumed that a single-polarized antenna is configured for the network device, a quantity of transmit antenna ports is D, and a quantity of frequency domain units is E. In this case, for one receive port of a terminal device, a channel estimated based on a received reference signal may be an E×D-dimensional matrix.

7. Frequency domain unit: The frequency domain unit is a unit of a frequency domain resource, and may represent different frequency domain resource granularities. For example, the frequency domain unit may include but is not limited to a subband (subband) (where when the frequency domain unit is a subband, each frequency domain unit includes a plurality of resource blocks), a resource block (RB), a resource block group (resource block group, RBG), and a precoding resource block group (precoding resource block group, PRG). In the following embodiments, all descriptions related to the frequency domain unit are described by using a resource block. It should be understood that the RB is merely an example of the frequency domain unit, and shall not constitute any limitation on this application. A specific definition of the frequency domain unit is not limited in this application.

8. Angle-delay pair: The angle-delay pair may also be referred to as a space-frequency vector pair. One angle-delay pair may be a combination of one angle vector and one delay vector. Each angle-delay pair may include one angle vector and one delay vector Angle vectors and/or delay vectors included in any two angle-delay pairs are different. In other words, each angle-delay pair may be uniquely determined by one angle vector and one delay vector.

In embodiments of this application, when a reference signal is precoded based on one angle vector $\mathbf{a}(\theta_k)$ and one delay vector $\mathbf{b}(\tau_l)$, a precoding matrix for precoding the reference signal may be represented as a product of the angle vector and a conjugate transpose of the delay vector, for example, may be represented as $\mathbf{a}(\theta_k) \times \mathbf{b}(\tau_l)^H$, and the precoding matrix may be a $D \times E$-dimensional matrix. Alternatively, the precoding matrix for precoding the reference signal may be represented as a Kronecker (Kronecker) product of the angle vector and the delay vector, for example, may be represented as $\mathbf{a}(\theta_k) \otimes \mathbf{b}(\tau_l)$, and the precoding matrix may be a $D \times E$-dimensional matrix.

It should be understood that various mathematical expressions listed above are merely examples, and shall not constitute any limitation on this application. For example, the precoding matrix for precoding the reference signal may alternatively be represented as a product of one delay vector and a conjugate transpose of one angle vector, or a Kronecker product of one delay vector and one angle vector, and the precoding matrix may be an $E \times D$-dimensional matrix. Alternatively, the precoding matrix for precoding the reference signal may be represented as mathematical transformation of the foregoing expressions. For brevity, examples are not listed one by one herein.

In embodiments of this application, a weighted sum of one or more angle-delay pairs may be used to determine a space-frequency matrix. A $D \times E$-dimensional matrix determined based on one angle-delay pair may be referred to as a component of the space-frequency matrix, and is referred to as a space-frequency component matrix for short. In the following embodiments, for ease of description, it is assumed that the $D \times E$-dimensional matrix determined based on one angle-delay pair is obtained from $\mathbf{a}(\theta_k) \times \mathbf{b}(\tau_l)^H$.

9. Space-frequency matrix: In embodiments of this application, the space-frequency matrix is an intermediate item for determining a precoding matrix

In embodiments of this application, the space-frequency matrix may be determined based on a receive port, or may be determined based on a transport layer. As described above, the space-frequency matrix may be determined based on a weighted sum of one or more angle-delay pairs. Therefore, the space-frequency matrix may also be an $E \times D$-dimensional matrix.

If the space-frequency matrix is determined based on the receive port, the space-frequency matrix may be referred to as a space-frequency matrix corresponding to the receive port. The space-frequency matrix corresponding to the receive port may be used to construct a downlink channel matrix of each frequency domain unit, so that a precoding matrix corresponding to each frequency domain unit can be determined. For example, a channel matrix corresponding to a frequency domain unit may be a conjugate transpose of a matrix constructed by using column vectors corresponding to the same frequency domain unit that are in space-frequency matrices corresponding to receive ports. For example, an $n^{th}$ column vector in the space-frequency matrix corresponding to each receive port is extracted, and a $D \times R$-dimensional matrix may be obtained by arranging the column vectors from left to right in a sequence of the receive ports. R indicates a quantity of receive ports, and R is an integer greater than or equal to 1. After conjugate transposition is performed on the matrix, a channel matrix $\mathbf{V}^{(n)}$ of an $n^{th}$ frequency domain unit may be obtained. A relationship between a channel matrix and a space-frequency matrix is described in detail below, and detailed descriptions of the relationship between a channel matrix and a space-frequency matrix are omitted herein.

If the space-frequency matrix is determined based on the transport layer, the space-frequency matrix may be referred to as a space-frequency matrix corresponding to the transport layer. The space-frequency matrix corresponding to the transport layer may be directly used to determine a precoding matrix corresponding to each frequency domain unit. For example, a precoding matrix corresponding to a frequency domain unit may be constructed by using column vectors corresponding to the same frequency domain unit that are in space-frequency matrices corresponding to transport layers. For example, an $n^{th}$ column vector in the space-frequency matrix corresponding to each transport layer is extracted, and a $D \times Z$-dimensional matrix may be obtained by arranging the column vectors from left to right in a sequence of the transport layers. Z indicates a quantity of transport layers, and Z is an integer greater than or equal to 1. The matrix may be used as a precoding matrix $\mathbf{W}^{(n)}$ of an $n^{th}$ frequency domain unit.

It should be noted that a precoding matrix determined according to a channel measurement method provided in embodiments of this application may be a precoding matrix directly used for downlink data transmission. Alternatively, some beamforming methods, for example, including zero forcing (zero forcing, ZF), a minimum mean square error (minimum mean square error, MMSE), and a maximum signal-to-leakage-and-noise ratio (signal-to-leakage-and-noise ratio, SLNR), may be used to obtain a precoding matrix finally used for downlink data transmission. This is not limited in this application. All precoding matrices below may be precoding matrices determined according to the channel measurement method provided in this application.

In the FDD system, because physical locations of a network device and a terminal device are fixed, the uplink channel and the downlink channel have partial reciprocity. For example, the uplink channel and the downlink channel have reciprocity of multipath angles and delays. Therefore, in a conventional solution, a network device may reconstruct downlink CSI based on prior information (namely, a multipath angle and delay) of an uplink channel and supplementary information fed back by a terminal device. Specifically, the network device generates precoding based on the angle and the delay, and uses the precoding to encode a downlink signal. The terminal device receives the encoded downlink signal, and generates a weighting coefficient based on the encoded downlink signal. The network device receives the weighting coefficient, and determines the downlink CSI based on the weighting coefficient and with reference to the multipath angle and delay. However, in a conventional solution, a quantity of weighting coefficients fed back by the terminal device is determined based on a quantity of pilots sent by the network device, and each weighting coefficient is fed back through one port. In this case, a quantity of weighting coefficients obtained by the network device is limited by a quantity of ports, and a larger quantity of ports selected for reference signal transmission indicates higher network device overheads and higher resource consumption.

To resolve this problem, refer to FIG. 2A. FIG. 2A is a flowchart of a channel parameter obtaining method according to an embodiment of this application. As shown in FIG. 2A, the method includes the following steps:

> 201: A network device sends a precoded reference signal and indication information, where the precoded reference signal is generated on P ports by mapping K virtual ports to each of the P ports through beamforming, the K virtual ports are associated with K selected frequency domain bases, K is an integer greater than 1, and the P ports are precoded reference signal CSI-RS ports of the network device and user equipment.
> 202: The user equipment receives the precoded reference signal and the indication information, and obtains a linear superposition coefficient based on the indication information and the precoded reference signal, where the linear superposition coefficient corresponds to M frequency domain bases in the K selected frequency domain bases and corresponds to T ports in the P ports, where $1 \leq T \leq P$, and $1 \leq M \leq K$.
> 203: The user equipment sends the linear superposition coefficient to the network device, and the network device receives the linear superposition coefficient sent by the user equipment.

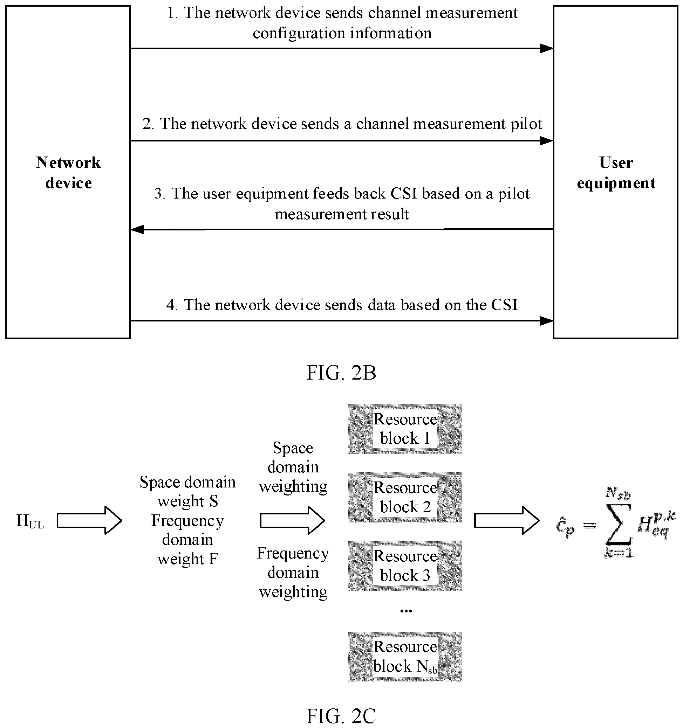

When the network device communicates with the user equipment, for a corresponding process, refer to FIG. 2B. FIG. 2B is a schematic diagram of a communication scenario according to an embodiment of this application. As shown in FIG. 2B, the network device sends a channel measurement configuration and a channel measurement reference signal (a precoded reference signal or a pilot) to the user equipment, the user equipment obtains corresponding channel state information (channel state information, CSI) based on the received channel measurement configuration and channel measurement reference signal, and feeds back the channel state information to the network device. Then, the network device sends downlink data to the user equipment based on the CSI.

In this process, because the network device may load, by using partial reciprocity of FDD, information that has reciprocity and that is obtained from an uplink channel to the pilot, the user equipment needs to feed back only information that has no reciprocity. The network device may obtain, by using the information that has no reciprocity and that is fed back by the user equipment, and in combination with the information that has reciprocity and that is obtained from the uplink channel, complete CSI for sending the downlink data.

For a specific process, refer to FIG. 2C. FIG. 2C is a schematic diagram of a CSI obtaining process based on FDD partial reciprocity according to an embodiment of this application. As shown in FIG. 2C, the network device estimates some prior information by using uplink channel information, including angle and delay information of the uplink channel. The network device performs projection on a space domain basis (S) universal set and a frequency domain basis (F) universal set, to obtain a corresponding optimal angle and delay estimation $\mathbf{C}_{UL}$:

$$\mathbf{H}_{\mathrm{UL}} = \mathbf{S}\mathbf{C}_{\mathrm{UL}}\mathbf{F}^{\mathrm{H}}$$

$\mathbf{S}$ corresponds to space domain information, and physically corresponds to an angle of arrival or an angle of departure of the network device; $\mathbf{F}$ corresponds to frequency domain information, and physically corresponds to a multipath delay of a multipath signal that arrives at the network device. $\mathbf{H}_{\mathrm{UL}}$ indicates an uplink space-frequency channel.

After obtaining the angle-delay estimation, the network device loads an angle-delay pair to a port, where the port is a port for a precoded reference signal, and may be referred to as a CSI-RS port. One angle-delay pair is loaded to each CSI-RS port, and a reference signal is precoded to generate a precoded reference signal. Then, the network device sends the precoded reference signal to the user equipment, and indicates the user equipment to obtain a specified port and an equivalent channel in frequency domain based on the received precoded reference signal. After receiving the precoded reference signal, the user equipment performs channel estimation to obtain that the equivalent channel on a resource block k on a port p is $H_{eq}^{p,k} = W^{p,k} H_{DL}^{k}$, where $W^{p,k}$ represents a weighted value of the resource block k on the port p, $H_{DL}^{k}$ represents a downlink channel on the resource block k, and $W^{p,k}$ and $H_{DL}^k$ are both obtained through parsing the precoded reference signal sent by the network device.

Then, the user equipment performs full-band superposition on the equivalent channel, to obtain a superposition coefficient of the corresponding angle-delay pair:

$$\hat{c}_p = \sum_{k=1}^{N_{sb}} H_{eq}^{p,k}$$

$H_{e,q}^{p,k}$ represents the equivalent channel of the port $p$ on the resource block $k$, and $N_{sb}$ represents a quantity of resource blocks.

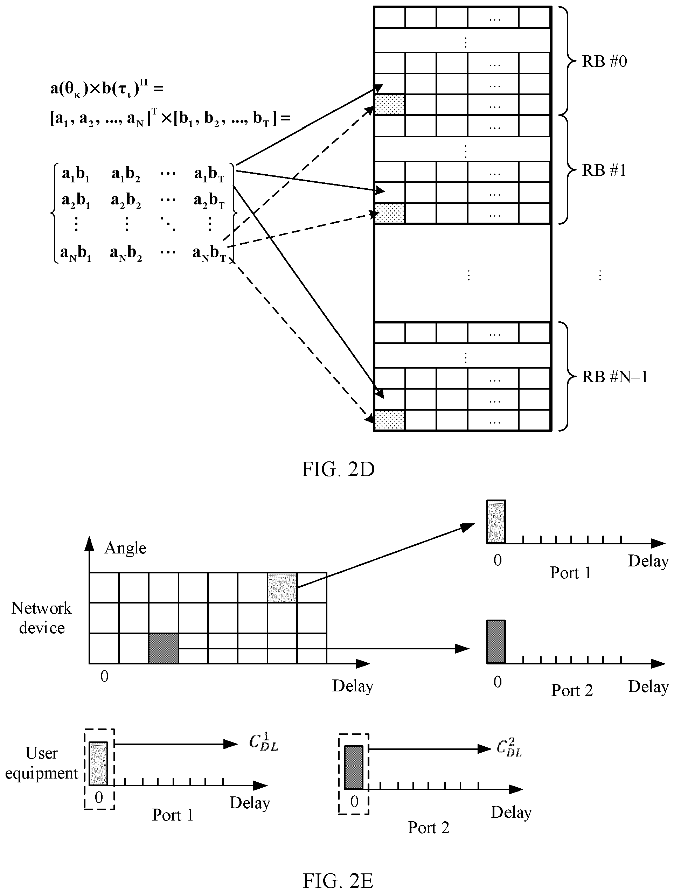

Specifically, FIG. 2D is a schematic diagram of precoding based on an angle-delay pair according to an embodiment of this application. FIG. 2D shows an example of performing, based on an angle-delay pair a($\theta_k$) × b($\tau_l$), frequency domain precoding on a reference signal carried on N RBs. The N RBs may include an RB #0 and an RB #1 to an RB #N-1. Each of the N RBs includes one or more REs for carrying the reference signal. For example, the RE for carrying the reference signal may be an RE on a first time domain symbol and a first subcarrier in each RB. This is shown as shadowed squares in the figure. In this case, an angle-delay pair may be loaded on the RE on the first time domain symbol and the first subcarrier in each RB. In addition, CSI-RS signals on one port appear on all RBs (or some of the RBs) in a spectrum. For example, a precoded reference signal of an angle-delay pair $a_1 b_T$ appears on resource blocks such as the RB #0, the RB #1, and the RB #N-1, and a precoded reference signal of $a_N b_T$ also appears on resource blocks such as the RB #0, the RB #1, and the RB #N-1. Precoded reference signals of different ports are multiplexed in a same group of RBs by code division, frequency division, and time division.

In the foregoing conventional method, one precoded reference signal is sent by the network device through one CSI-RS port. After receiving the precoded reference signal, the user equipment obtains a corresponding linear superposition coefficient in a full-band superposition manner. If a frequency domain DFT basis is used as an example, the foregoing solution is equivalent to that on each CSI-RS port, the network device moves a linear superposition coefficient that needs to be fed back to a direct current component (a delay of 0 or a first frequency domain basis), and the user equipment extracts the direct current component for feedback. FIG. 2E is a schematic diagram of an equivalent process of a CSI obtaining solution based on FDD partial reciprocity according to an embodiment of this application. On a port 1 and a port 2, a network device separately moves coefficients corresponding to two angle-delay pairs to direct current components, and user equipment may obtain the coefficients by full-band superposition, and feed back the coefficients to the network device.

In the foregoing CSI feedback solution, only one angle-delay pair can be loaded on each CSI-RS port, and the network device needs to separately perform CSI-RS weighted sending for each user. Therefore, if the network device sends pilots to Q users, and each user corresponds to R angle-delay pairs, a quantity of required CSI-RS ports is Q*R. This causes huge overheads of the network device. In another aspect, in an existing 5G protocol, a maximum quantity of CSI-RS ports is 32. Therefore, a quantity of angle-delay pairs that can be loaded by the network device is also limited.

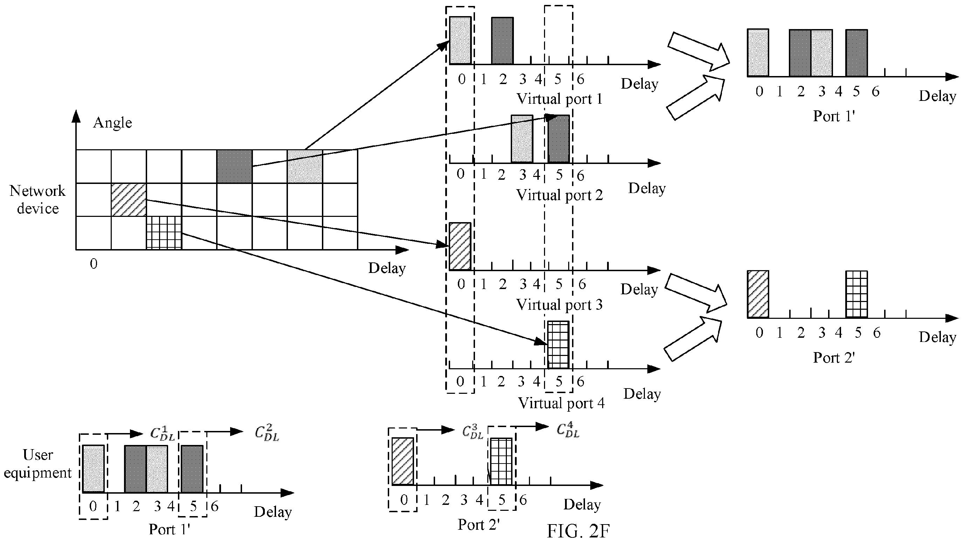

In embodiments of this application, if on a same port, the network device moves fed back coefficients of a plurality of angle-delay pairs to specific different delay locations and then performs superposition, to load the plurality of angle-delay pairs on the same port, pilot utilization can be effectively improved. FIG. 2F is a schematic diagram of loading a plurality of angle-delay pairs to a same port according to an embodiment of this application. In FIG. 2F, angle-delay pairs a1 and a2 correspond to a same angle but different delays. Therefore, a1 and a2 may be moved, by using a1 as a reference, to locations corresponding to a delay 0 and a delay 2 on a virtual port 1. Alternatively, a1 and a2 may be moved, by using a2 as a reference, to locations corresponding to a delay 3 and a delay 5 on a virtual port 2. In this case, the two virtual ports are superposed, so that a1, a2, a1, and a2 respectively corresponding to the delay 0, the delay 2, the delay 3, and the delay 5 on a port 1' may be obtained. (It needs to ensure that locations of port angle-delay pairs after superposition do not overlap.) Similarly, angle-delay pairs a3 and a4 may be moved to locations of a delay 0 of a virtual port 3 and a delay 5 of a virtual port 4 respectively, and then the two virtual ports are superposed to obtain a3 and a4 of the delay 0 and the delay 5 on a port 2'.

In the foregoing process, on P ports, K frequency domain bases of each port correspond to K angle-delay pairs, and the precoded reference signal is generated on the P ports by mapping K virtual ports to each of the P ports through beamforming. This includes: The network device obtains a first weight of each of the K angle-delay pairs in an $n^{th}$ resource block, where the $n^{th}$ resource block is any one of resource blocks for sending the precoded reference signal, obtains a space-frequency weight of the $n^{th}$ resource block on each port based on K first weights and the K frequency domain bases that correspond to each port, so that the K virtual ports are mapped to each port through beamforming, and performs precoding based on the space-frequency weight of the $n^{th}$ resource block and a downlink signal, to obtain the precoded reference signal corresponding to each port. K is an integer greater than 1.

Specifically, each CSI-RS port of the network device includes several frequency domain bases, the K frequency domain bases are selected from the several frequency domain bases, and each frequency domain basis is associated with one angle-delay pair. In this case, one CSI-RS port is associated with K angle-delay pairs, to map the K virtual ports (where each original virtual port is associated with one angle-delay pair) to one CSI-RS port. On the K virtual ports, each virtual port is associated with one angle-delay pair to obtain a corresponding weight, and the corresponding weight is denoted on the $n^{th}$ resource block, and a first weight of a $k^{th}$ angle-delay pair is $W_{n,k}$. In this case, when information about the K angle-delay pairs is loaded to a CSI-RS port $p$, a space-frequency weight on an $n^{th}$ resource block on the port $p$ may be represented as:

$$W_n^p = \sum_{k=1}^{K} W_{n,k} e^{-j2\pi(n-1)(f_k-1)/N_f}, 1 \leq n \leq N_f$$

$N_f$ represents a length of a DFT basis, and is a quantity of resource blocks. It is assumed that the network device selects $K$ columns of a DFT matrix (in other words, the network device selects K frequency domain bases for each CSI-RS port), and an index of the K frequency domain bases is $\{f_1, f_2, \cdots, f_K\}$, $1 \leq f_k \leq N_f$, $1 \leq k \leq K$.

After the space-frequency weight is obtained, precoding is performed with reference to the downlink signal, to obtain a precoded reference signal corresponding to each CSI-RS port, and the precoded reference signal is sent to user equipment for subsequent CSI obtaining.

In addition to sending the precoded reference signal to the user equipment, the network device may further send a channel measurement configuration to the user equipment, where the channel measurement configuration includes indication information that indicates the K frequency domain bases of each of the P ports for associating angle-delay pairs. The K frequency domain bases may be indicated by the index $\{f_1, f_2, \ldots, f_k, \ldots f_K\}$, where $1 \leq k \leq K$, and K is a quantity of frequency domain bases selected on each antenna port of the network device. The user equipment learns of K frequency domain basis locations on each port based on the indication information.

Further, the indication information may further include a quantity T of ports for which the user equipment needs to obtain linear superposition coefficients and a quantity M of frequency domain bases, where $1 \leq T \leq P$, and $1 \leq M \leq K$, that is, the network device sends precoded reference signals of the P ports, each of the P ports corresponds to the K frequency domain bases. The user equipment needs to obtain only linear superposition coefficients at M frequency domain basis locations on the T ports. Values of T and M are indicated by the network device. Specific T ports in the P ports and locations of specific M frequency domain bases in the K frequency domain bases are determined by the user equipment based on parameters such as signal strength and signal quality.

Specifically, as shown in FIG. 2F, when K=2, it indicates that every two virtual ports are mapped to one CSI-RS port, a virtual port 1 and a virtual port 2 are mapped to a port 1', a virtual port 3 and a virtual port 4 are mapped to a port 2', a quantity of frequency domain bases on the CSI-RS port is 2, namely, frequency domain basis locations are locations corresponding to a delay 0 and a delay 5, and corresponding index values are respectively 0 and 5. T indicated by the indication information may be 1, and M may be 2. In this case, the user equipment may obtain linear superposition coefficients corresponding to frequency domain basis locations whose index values are 0 and 5 on the port 2'. Alternatively, T indicated by the indication information may be 2, and M may be 1. In this case, the user equipment may separately obtain linear superposition coefficients corresponding to frequency domain basis locations whose index values are 5 on the port 1' and the port 2'.

For an $i^{th}$ receive antenna (or for $i^{th}$ user equipment), a linear superposition coefficient $\hat{c}_{p,k}$ corresponding to a $k^{th}$ frequency domain basis location of a $p^{th}$ port is calculated as follows:

$$\hat{c}_{p,k}^i = \sum_{n=1}^{N_f} H_{eq,i}^{p,n} e^{j2\pi(n-1)(f_k-1)/N_f}$$

$H_{eq,i}^{p,n}$ represents the $i^{th}$ receive antenna, and an equivalent channel of an $n^{th}$ frequency domain unit that is obtained through channel estimation on the $p^{th}$ port may be obtained through estimation based on the precoded reference signal received by the user equipment. $f_k$ represents a frequency domain basis index, and $N_f$ represents a frequency domain basis length. Another equivalent method is to perform IFFT on an equivalent channel to obtain an $f_k^{th}$ component.

It can be learned that in this embodiment of this application, the network device maps, to one CSI-RS port through beamforming, K virtual ports respectively corresponding to angle-delay pairs, to generate a precoded reference signal corresponding to the port and the K angle-delay pairs, so that precoded reference signals corresponding to a plurality of angle-delay pairs are sent through one port. This reduces CSI-RS port quantity overheads of the network device, avoids a limitation of a quantity of network device ports on a quantity of angle-delay pairs that can be loaded by the network device on a reference signal, improves efficiency of obtaining a channel parameter by the network device, and improves channel estimation accuracy.

After obtaining the linear superposition coefficient, the user equipment needs to feed back the linear superposition coefficient to the network device, so that the network device sends the downlink signal based on the coefficient. The linear superposition coefficient obtained in this embodiment of this application may correspond to a plurality of frequency domain basis locations on a same port. Therefore, during feedback, for example, a linear superposition coefficient that needs to be fed back includes linear superposition coefficients whose frequency domain basis location indices are 0 and 5 on a port A, and linear superposition coefficients whose frequency domain basis location indices are 0 and 5 on a port B. Feedback may be performed in a port sequence first and then a frequency domain basis location sequence. Assuming that the port A is sorted before the port B, the linear superposition coefficients whose basis location indices are 0 and 5 on the port A are first fed back, and then the linear superposition coefficients whose basis location indices are 0 and 5 on the port B are fed back. Alternatively, feedback may be performed in a frequency domain basis location sequence first and then a port sequence. In this case, linear superposition coefficients whose basis location indices are 0 on the port A and the port B are first fed back, and then linear superposition coefficients whose basis location indices are 5 on the port A and the port B are fed back.

Alternatively, when the user equipment feeds back the linear superposition coefficient, feedback may be performed in a codebook-structure manner. A codebook in this embodiment of this application may be represented as:

$$W = W_1 \tilde{W}_2 W_f^H$$

$W_1$ represents a space domain matrix, and the space domain matrix is a $P \times 2L_0$-dimensional matrix. $W_1$ is for selecting $2L_0$ ($2L_0$=T) ports from $P$ CSI-RS ports. $L_0$ means that $L_0$ space domain vectors are selected in one polarization direction. $P$ means a quantity of CSI-RS ports. Values of $L_0$ and $P$ may be configured by a base station by using one or more of radio resource control (Radio Resource Control, RRC) signaling, MAC control element (MAC Control Element, MAC CE) signaling, and downlink control information (Downlink Control Information, DCI) signaling, or may be agreed on in a protocol.

$W_f$ is a frequency domain matrix, and is a $N_f \times M$-dimensional matrix. A dimension of a basis vector of the matrix is $N_f \times 1$. $N_f$ is a quantity of resource blocks, M columns indicate that the user equipment selects M columns from K columns of DFT, and the K columns of DFT correspond to K frequency domain bases selected by the base station.

$\tilde{W}_2$ is a linear superposition coefficient matrix, and is a $2L_0 \times M$-dimensional matrix. Based on $N_{rx}KP$ coefficients obtained through calculation (where $N_{rx}$ is a quantity of receive antennas), there are the following two $\tilde{W}_2$ feedback modes.

Mode 1: K$P$ coefficients corresponding to different user equipment receive antennas are separately fed back, and for one group of KP coefficients, one $\tilde{W}_2$ includes coefficients that are in the KP coefficients and that correspond to the T ports and the M frequency domain bases that are selected by the user equipment. Specifically, the $2L_0 \times M$ linear superposition coefficient matrix $\tilde{W}_2$ is fed back in a manner of first CSI-RS port number and then frequency component index (or first frequency component index and then CSI-RS port number) according to a rule of first row and then column (or first column and then row) in ascending (or descending) sequence of numbers. $N_{rx}$ receive antennas correspond to $N_{rx}$ $\tilde{W}_2$s. A total quantity of reported elements of $N_{rx}$ $\tilde{W}_2$s is B, where the element is selected by the UE, and B $\leq 2L_0MN_{rx}$. B is indicated by the base station by using signaling. When B < $2L_0MN_{rx}$, the UE needs to additionally report a location of the selected element, for example, may indicate the location of the selected element by reporting a bitmap (bitmap). Specifically, the bitmap includes $2L_0MN_{rx}$ bits, and a maximum quantity of bits that are 1 is B. If a bit is 1, it indicates that an element corresponding to the bit is reported, or if a bit is 0, it indicates that an element corresponding to the bit is not reported. A correspondence between an element and a bit is determined by a reporting sequence. For example, the bitmap may be 0101, which indicates that there are four elements in total, and only elements corresponding to the 2nd and 4th bits are reported.

Mode 2: Linear superposition coefficients corresponding to $N_{rx}$ receive antennas are constructed as a matrix $\hat{\mathbf{C}}$ of $KP \times N_{rx}$, and SVD decomposition is performed on $\hat{\mathbf{C}}$ to obtain:

$$\hat{\mathbf{C}} = V\Sigma U^H$$

The first R columns of the matrix V are selected for calculation based on an order (the order is denoted as R) for calculation. For each column, coefficients corresponding to the T ports and the M frequency domain bases selected by the user equipment are fed back as one $2L_0 \times M$ linear superposition coefficient matrix $\tilde{W}_2$, in a manner of first CSI-RS port number and then frequency component index (or first frequency component index and then CSI-RS port number) according to a rule of first row and then column (or first column and then row) in ascending (or descending) sequence of numbers. The order is R, and corresponds to R $\tilde{W}_2$s. A total quantity of reported elements of R $\tilde{W}_2$s is B, where the element is selected by the user equipment, and B $\leq 2L_0MN_{rx}$. B is indicated by the network device by using signaling. When B < $2L_0MN_{rx}$, the user equipment needs to additionally report a location of the selected element, for example, may indicate the location of the selected element by reporting a bitmap. Reporting the bitmap can help the network device determine a total quantity of elements reported by the user equipment and a location of a selected element, to improve information obtaining efficiency and avoid information omission.

In addition, an element of $\tilde{W}_2$ may be 0, indicating that the element is not fed back.

Optionally, in the foregoing codebook $W = W_1 \tilde{W}_2 W_f^H$, $W_1$ may be specified as a $P \times P$ unit matrix (that is, $2L_0 = P$, and $P$ is a quantity of CSI-RS ports) by using a protocol, or this may be pre-specified by the network device, or may be agreed on by the network device and the user equipment in a protocol. In this case, the network device does not need to indicate $L_0$, the user equipment does not need to report $W_1$, and only $\tilde{W}_2$, $W_f$, and indication information (if required) of a location of a selected element in $\tilde{W}_2$ need to be reported.

Optionally, in the foregoing codebook $W = W_1 \tilde{W}_2 W_f^H$, $W_f$ may be specified as an $N_f \times K$ frequency domain basis matrix (that is, M=K) by using a protocol. $W_f$ is K frequency domain bases selected by the network device. In this case, the network device does not need to indicate $M$, the user equipment does not need to report $W_f$, and only $\tilde{W}_2$, $W_1$, and indication information (if required) of a location of a selected element in $\tilde{W}_2$ need to be reported.

Optionally, in the foregoing codebook $W = W_1 \tilde{W}_2 W_f^H$, by using a protocol, $W_1$ may be specified as a $P \times P$ unit matrix (that is, $2L_0 = P$), and $W_f$ may be specified as an $N_f \times K$ frequency domain basis matrix (that is, M=K). In this case, the network device does not need to indicate M and $L_0$, the UE does not need to report $W_f$ and $W_1$, and only $\tilde{W}_2$ and indication information (if required) of a location of a selected element in $\tilde{W}_2$ need to be reported.

According to the foregoing method in which an existing parameter is used as a default parameter for performing codebook feedback, the user equipment reduces an amount of reported information, and communication efficiency is improved.

It can be learned that, in this embodiment of this application, when the linear superposition coefficient matrix is fed back, because coefficients correspond to different frequency domain basis locations on different ports, two parameters, which are a port number and a frequency domain basis location, need to be considered. The user equipment may determine a port and frequency domain basis location sequence for coefficient feedback based on a requirement of the user equipment, or the network device may specify a port and frequency domain basis location sequence, or the network device and the user equipment agree on a port and frequency domain basis location sequence in a protocol. This helps the network device determine whether the received linear superposition coefficient is complete or whether loss occurs, and improves coefficient feedback efficiency.

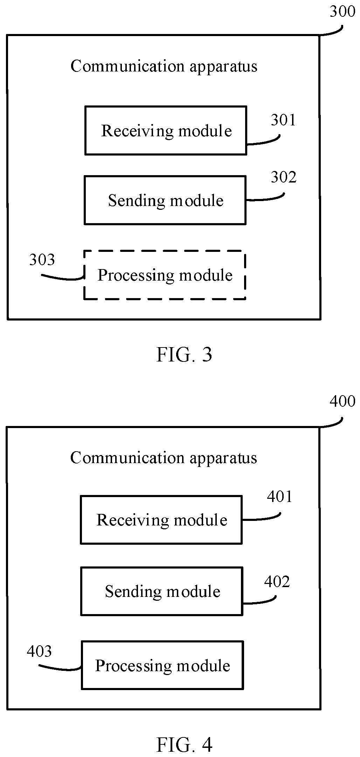

The foregoing describes in detail the method provided in embodiments of this application. The apparatuses provided in embodiments of this application are described below in detail with reference to FIG. 3 to FIG. 9. It should be understood that descriptions of apparatus embodiments correspond to the descriptions of the method embodiment. Therefore, for content that is not described in detail, refer to the foregoing method embodiment. For brevity, details are not described herein again.

FIG. 3 is a schematic block diagram of a communication apparatus 300 according to an embodiment of this application.

It should be understood that the apparatus 300 may correspond to the network device shown in FIG. 2A to FIG. 2F or a chip in the network device, and may have any function of the network device in the method embodiment shown in FIG. 2A to FIG. 2F. The apparatus 300 includes a receiving module 301 and a sending module 302.

The sending module 302 is configured to send a precoded reference signal and indication information, where the precoded reference signal is generated on P ports by mapping K virtual ports to each of the P ports through beamforming, the K virtual ports are associated with K selected frequency domain bases, the indication information indicates the K selected frequency domain bases, K is an integer greater than 1, and the P ports are precoded reference signal CSI-RS ports of the network device and user equipment.

The receiving module 301 is configured to receive a linear superposition coefficient sent by the user equipment, where the linear superposition coefficient corresponds to M frequency domain bases in the K selected frequency domain bases and corresponds to T ports in the P ports, where $1 \le T \le P$, and $1 \le M \le K$.

Optionally, the K frequency domain bases of each port correspond to K angle-delay pairs, and the apparatus further includes a processing module 303, configured to:

obtain a first weight of each of the K angle-delay pairs in an $n^{th}$ frequency domain unit, where the $n^{th}$ frequency domain unit is any one of frequency domain units for sending the precoded reference signal;

obtain a space-frequency weight of the $n^{th}$ frequency domain unit on each port based on K first weights and the K frequency domain bases that correspond to each port, so that the K virtual ports are mapped to each port through beamforming; and

perform precoding based on the space-frequency weight of the $n^{th}$ frequency domain unit and a downlink signal, to obtain the precoded reference signal corresponding to each port.

Optionally, the receiving module 301 is specifically configured to:

receive the linear superposition coefficients in a port sequence first and then a frequency domain basis sequence; or
receive the linear superposition coefficients in a frequency domain basis sequence first and then a port sequence.

Optionally, the processing module 303 may be a chip, an encoder, an encoding circuit, or another integrated circuit that can implement the method in this application.

Optionally, the receiving module 301 and the sending module 302 may be an interface circuit or a transceiver. The receiving module 301 and the sending module 302 may be independent modules, or may be integrated into a transceiver module (not shown in the figure). The transceiver module may implement functions of the receiving module 301 and the sending module 302. The transceiver module may be an interface circuit or a transceiver

The specific methods and embodiments have been described above, and the apparatus 300 is configured to perform the channel parameter obtaining method corresponding to the network device. Therefore, for details, refer to related parts in the corresponding embodiment. Details are not described herein again.

Optionally, the apparatus 300 may further include a storage module (not shown in the figure). The storage module may be configured to store data and/or signaling. The storage module may be coupled to the processing module 303, or may be coupled to the receiving module 301 or the sending module 302. For example, the processing module 303 may be configured to read the data and/or the signaling in the storage module, to perform the key obtaining method in the foregoing method embodiments.

FIG. 4 is a schematic block diagram of a communication apparatus 400 according to an embodiment of this application.

It should be understood that the apparatus 400 may correspond to the user equipment shown in FIG. 2A to FIG. 2F or a chip in the user equipment, and may have any function of the user equipment in the method embodiment shown in FIG. 2A to FIG. 2F. The apparatus 400 includes a receiving module 401, a sending module 402, and a processing module 403.

The receiving module 401 is configured to receive indication information and a precoded reference signal, where the precoded reference signal is generated on P ports by mapping K virtual ports to each of the P ports through beamforming, the K virtual ports are associated with K selected frequency domain bases, K is an integer greater than 1, and the P ports are precoded reference signal CSI-RS ports of a network device and the user equipment.

The processing module 403 is configured to obtain a linear superposition coefficient based on the indication information and the precoded reference signal, where the linear superposition coefficient corresponds to M frequency domain bases in the K selected frequency domain bases and corresponds to T ports in the P ports, where $1 \leq T \leq P$, and $1 \leq M \leq K$.

The sending module 402 is configured to send the linear superposition coefficient to the network device.

Optionally, the processing module 403 is specifically configured to:

determine the K selected frequency domain bases based on the indication information, and determine, based on the precoded reference signal, the T ports and the M frequency domain bases corresponding to each port that are for obtaining the linear superposition coefficient;
obtain an equivalent channel of each of the T ports that is in the $n^{th}$ frequency domain unit based on the precoded reference signal; and
obtain, through calculation based on the equivalent channel and an index of the M frequency domain bases, the linear superposition coefficient on the M frequency domain bases corresponding to each of the T ports.

Optionally, the sending module 402 is specifically configured to:

send the linear superposition coefficients in a port sequence first and then a frequency domain basis sequence; or
send the linear superposition coefficients in a frequency domain basis sequence first and then a port sequence.

Optionally, the sending module 402 is configured to send the linear superposition coefficient to the network device by sending a codebook, and is specifically configured to:
send the codebook to the network device, where the codebook includes a port selection matrix W1, a frequency domain matrix $W_f$, and a linear superposition coefficient matrix $\tilde{W}_2$, a dimension corresponding to W1 is P*T, $W_f$ includes M columns selected from K columns in a discrete Fourier transform DFT matrix, and $\tilde{W}_2$ is a matrix including T*M linear superposition coefficients.

Optionally, the processing module 403 may be a chip, an encoder, an encoding circuit, or another integrated circuit that can implement the method in this application.

Optionally, the receiving module 401 and the sending module 402 may be an interface circuit or a transceiver. The receiving module 401 and the sending module 402 may be independent modules, or may be integrated into a transceiver module (not shown in the figure). The transceiver module may implement functions of the receiving module 401 and the sending module 402. The transceiver module may be an interface circuit or a transceiver

The specific methods and embodiments have been described above, and the apparatus 400 is configured to perform the channel parameter obtaining method corresponding to the user equipment. Therefore, for details, refer to related parts in the corresponding embodiment. Details are not described herein again.

Optionally, the apparatus 400 may further include a storage module (not shown in the figure). The storage module may be configured to store data and/or signaling. The storage module may be coupled to the processing module 403, or may be coupled to the receiving module 401 or the sending module 402. For example, the processing module 403 may be configured to read the data and/or the signaling in the storage module, to perform the key obtaining method in the foregoing method embodiments.

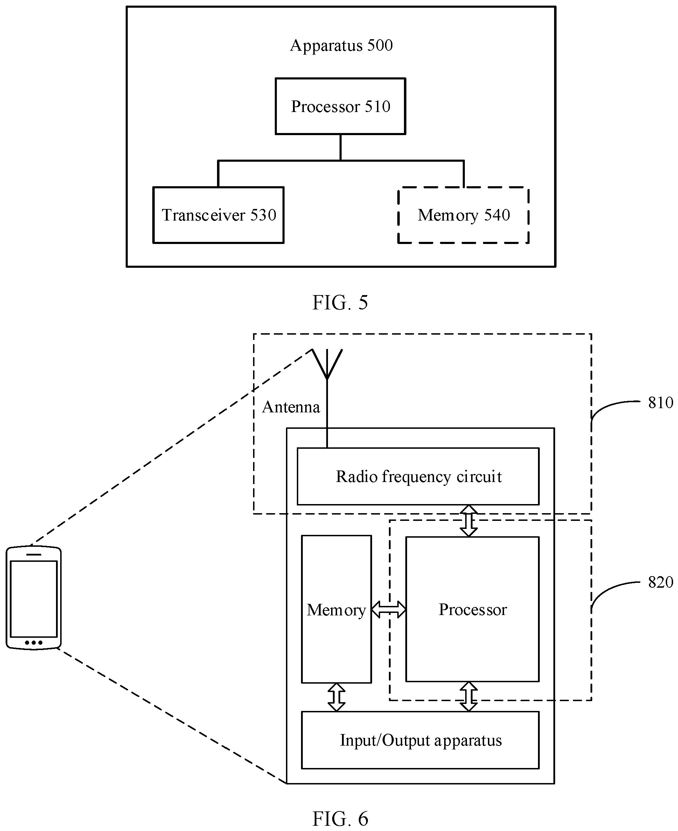

FIG. 5 is a schematic diagram of a structure of a communication apparatus according to an embodiment of this application. For a structure of user equipment or a network device, refer to the structure shown in FIG. 5. The apparatus may include a processor 510 and a transceiver 530. Optionally, the apparatus may further include a memory 540. The processor 510, the transceiver 530, and the memory 540 communicate with each other through an internal connection path. Related functions implemented by the processing module in FIG. 3 or FIG. 4 may be implemented by the processor 510, and related functions implemented by the receiving module and the sending module may be implemented by the processor 510 by controlling the transceiver 530.

Optionally, the processor 510 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in embodiments of this application. Alternatively, the processor may be one or more devices, circuits, and/or processing cores configured to process data (for example, computer program instructions). For example, the processor may be a baseband processor or a central processing unit. The baseband processor may be configured to process a communication protocol and communication data. The central processing unit may be configured to: control a communication apparatus (for example, a base station, a terminal device, or a chip), execute a software program, and process data of the software program.

Optionally, the processor 510 may include one or more processors, for example, include one or more central processing units (central processing units, CPUs). When the processor is one CPU, the CPU may be a single-core CPU, or may be a multi-core CPU.

The transceiver 530 is configured to: send and receive data and/or a signal, and receive data and/or a signal. The transceiver may include a transmitter and a receiver. The transmitter is configured to send data and/or a signal, and the receiver is configured to receive data and/or a signal.

The memory 540 includes but is not limited to a random access memory (random access memory, RAM), a read-only memory (read-only memory, ROM), an erasable programmable memory (erasable programmable read-only memory, EPROM), and a compact disc read-only memory (compact disc read-only memory, CD-ROM). The memory 540 is configured to store related instructions and data.

The memory 540 is configured to store program code and data of the terminal device, and may be a separate device or integrated into the processor 510.

Specifically, the processor 510 is configured to control the transceiver to perform information transmission with the terminal device. For details, refer to the descriptions in the foregoing method embodiment. Details are not described herein again.

During specific implementation, in an embodiment, the apparatus 500 may further include an output device and an input device. The output device communicates with the processor 510, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 510, and may receive an input from a user in a plurality of manners. For example, the input device may be a mouse, a keyboard, a touchscreen device, or a sensor device.

It may be understood that FIG. 5 merely shows a simplified design of the communication apparatus. During actual application, the apparatus may further include other necessary components, including but not limited to any quantity of transceivers, processors, controllers, memories, and the like, and all user equipment that can implement this application shall fall within the protection scope of this application.

In a possible design, the apparatus 500 may be a chip, for example, may be a communication chip that can be used in user equipment, and configured to implement a related function of the processor 510 in the user equipment. The chip may be a field programmable gate array, a dedicated integrated chip, a system chip, a central processing unit, a network processor, a digital signal processing circuit, or a microcontroller that implements the related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be user equipment or a circuit. The apparatus may be configured to perform an action performed by the user equipment in the foregoing method embodiments.

Optionally, when the apparatus in this embodiment is user equipment, FIG. 6 is a simplified schematic diagram of a structure of user equipment. For ease of understanding and illustration, an example in which the user equipment is a mobile phone is used in FIG. 6. As shown in FIG. 6, the user equipment includes a processor, a memory, a radio frequency circuit, an antenna, and an input/output apparatus. The processor is mainly configured to: process a communication protocol and communication data, control the user equipment, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of user equipment may not have an input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the user equipment, the radio frequency circuit receives a radio frequency signal through the antenna, converts the radio frequency signal into a baseband signal, and outputs the baseband signal to the processor, and the processor converts the baseband signal into data and processes the data. For ease of description, FIG. 6 shows only one memory and one processor. In an actual user equipment product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the user equipment, and the processor that has a processing function may be considered as a processing unit of the user equipment. As shown in FIG. 6, the user equipment includes a transceiver unit 810 and a processing unit 820. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. To be specific, the transceiver unit 810 includes the receiving unit and the sending unit.

The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 810 is configured to perform a sending operation and a receiving operation on a user equipment side in the foregoing method embodiments, and the processing unit 820 is configured to perform an operation of the user equipment other than the sending operation and the receiving operation in the foregoing method embodiments.

For example, in an implementation, the transceiver unit 810 is configured to perform the receiving and sending operations in step 202 and step 203 in FIG. 2A, and/or the transceiver unit 810 is further configured to perform other receiving and sending steps on the user equipment side in embodiments of this application.

When the apparatus is a chip, the chip includes a transceiver unit and a processing unit. The transceiver unit may be an input/output circuit or a communication interface. The processing unit is a processor, a microprocessor, or an integrated circuit integrated on the chip.

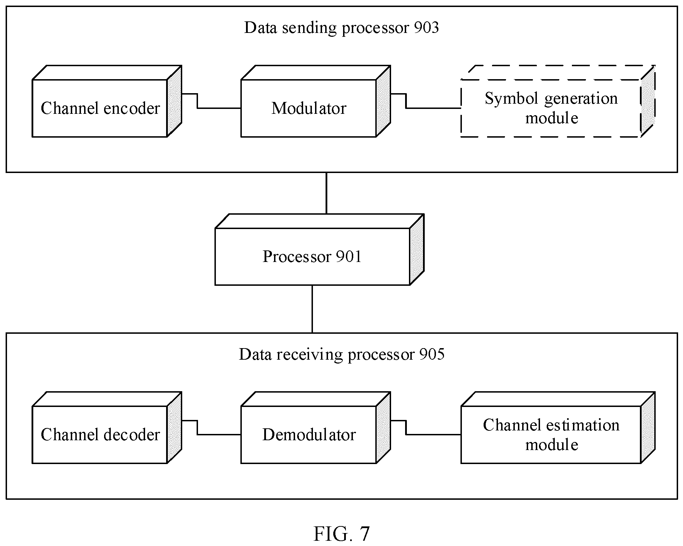

Optionally, when the apparatus is user equipment, further refer to a device shown in FIG. 7. In an example, the device can implement functions similar to the functions of the processor 510 in FIG. 5. In FIG. 7, the device includes a processor 901, a data sending processor 903, and a data receiving processor 905. The processing module 403 in the embodiment shown in FIG. 4 may be the processor 901 in FIG. 7, and completes a corresponding function. The receiving module 401 and the sending module 402 in the embodiment shown in FIG. 4 may be the data sending processor 903 and the data receiving processor 905 in FIG. 7. Although a channel encoder and a channel decoder are shown in FIG. 7, it may be understood that these modules do not constitute a limitation on this embodiment, and are merely examples.

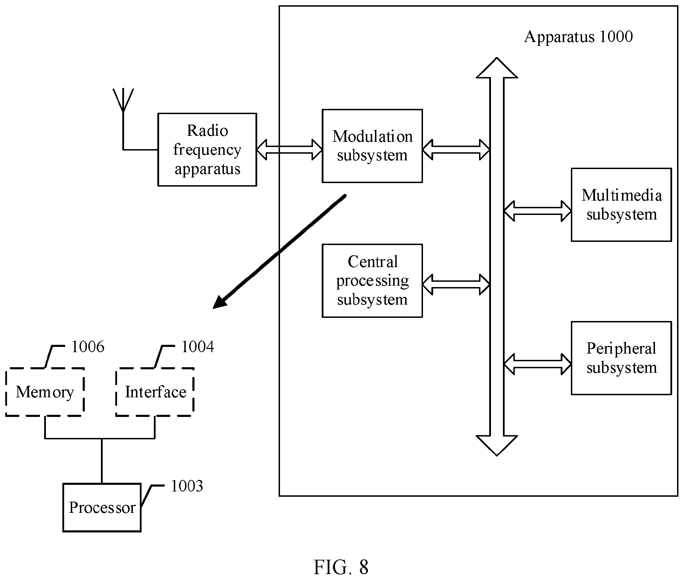

FIG. 8 shows another form of this embodiment. A processing apparatus 1000 includes modules such as a modulation subsystem, a central processing subsystem, and a peripheral subsystem. A communication device in this embodiment may be used as the modulation subsystem in the processing apparatus 1000. Specifically, the modulation subsystem may include a processor 1003 and an interface 1004. The processor 1003 completes a function of the processing module 420, and the interface 1004 completes a function of the transceiver module 410. In another variation, the modulation subsystem includes a memory 1006, the processor 1003, and a program that is stored in the memory and that can be run on the processor. When the program is executed by the processor, the methods in embodiments are implemented. It should be noted that the memory 1006 may be non-volatile or volatile. The memory 1006 may be located in the modulation subsystem, or may be located in the processing apparatus 1000, provided that the memory 1006 can be connected to the processor 1003.

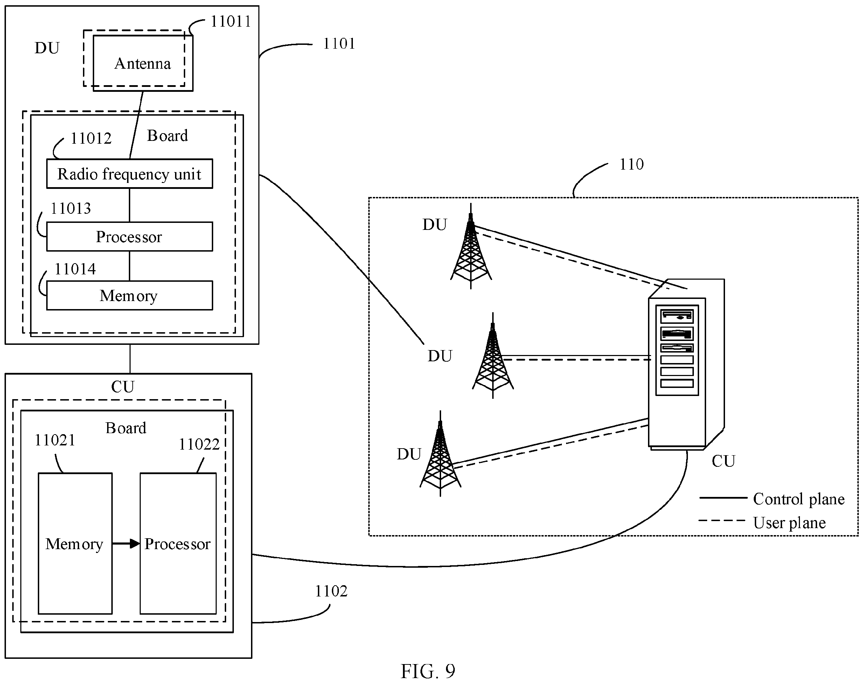

When the apparatus in this embodiment is a network device, the network device may be shown in FIG. 9. For example, the apparatus 110 is a base station. The base station may be used in the system shown in FIG. 1, to perform a function of the network device in the foregoing method embodiments. The base station 110 may include one or more DUs 1101 and one or more CUs 1102. The CU 1102 may communicate with a next generation core (NG core, NC) network. The DU 1101 may include at least one antenna 11011, at least one radio frequency unit 11012, at least one processor 11013, and at least one memory 11014. The DU 1101 is mainly configured to: send and receive a radio frequency signal, perform conversion between a radio frequency signal and a baseband signal, and perform partial baseband processing. The CU 1102 may include at least one processor 11022 and at least one memory 11021. The CU 1102 and the DU 1101 may communicate with each other through an interface. A control plane (control plane) interface may be Fs-C, for example, F1-C, and a user plane (user plane) interface may be Fs-U, for example, F1-U.

The CU 1102 is mainly configured to: perform baseband processing, control the base station, and the like. The DU 1101 and the CU 1102 may be physically disposed together, or may be physically disposed separately, namely, a distributed base station. The CU 1102 is a control center of the base station, may also be referred to as a processing unit, and is mainly configured to complete a baseband processing function. For example, the CU 1102 may be configured to control the base station to perform an operation procedure related to the network device in the foregoing method embodiments.

Specifically, baseband processing on the CU and the DU may be divided based on protocol layers of a wireless network. For example, functions of a packet data convergence protocol (packet data convergence protocol, PDCP) layer and a protocol layer above the PDCP layer are set in the CU. Functions of protocol layers below the PDCP layer, such as a radio link control (radio link control, RLC) layer and a medium access control (medium access control, MAC) layer, are set in the DU. For another example, the CU implements functions of a radio resource control (radio resource control, RRC) layer and a packet data convergence protocol (packet data convergence protocol, PDCP) layer. The DU implements functions of a radio link control (radio link control, RLC) layer, a MAC layer, and a physical (physical, PHY) layer.

In addition, optionally, the base station 110 may include one or more radio frequency units (RUs), one or more DUs, and one or more CUs. The DU may include the at least one processor 11013 and the at least one memory 11014, the RU may include the at least one antenna 11011 and the at least one radio frequency unit 11012, and the CU may include the at least one processor 11022 and the at least one memory 11021.

For example, in an implementation, the processor 11013 is configured to perform processing steps on a network device side in FIG. 2A. The radio frequency unit 11012 is configured to perform the receiving and sending operations in step 201 in FIG. 2A.

In an example, the CU 1102 may include one or more boards, and a plurality of boards may jointly support a radio access network (for example, a 5G network) of a single access standard, or may separately support radio access networks (such as an LTE network, a 5G network, or another network) of different access standards. The memory 11021 and the processor 11022 may serve one or more boards. In other words, a memory and a processor may be disposed on each board. Alternatively, a plurality of boards may share a same memory and a same processor. In addition, a necessary circuit may further be disposed on each board. The DU 1101 may include one or more boards, and a plurality of boards may jointly support a radio access network (for example, a 5G network) of a single access standard, or may separately support radio access networks (such as an LTE network, a 5G network, or another network) of different access standards. The memory 11014 and the processor 11013 may serve one or more boards. In other words, a memory and a processor may be disposed on each board. Alternatively, a plurality of boards may share a same memory and a same processor. In addition, a necessary circuit may further be disposed on each board.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state drive, SSD)), or the like.

It should be understood that, the processor may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps of the method disclosed with reference to embodiments of this application may be directly presented as being performed and completed by a hardware decoding processor, or performed and completed by a combination of hardware and a software module in a decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that, in embodiments of this application, the memory may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), and a direct rambus random access memory (direct rambus RAM, DR RAM).

In this application, "at least one" means one or more, and "a plurality of" means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one (one piece) of the following" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that "one embodiment" or "an embodiment" mentioned in the entire specification means that particular features, structures, or characteristics related to the embodiment are included in at least one embodiment of the present invention. Therefore, "in one embodiment" or "in an embodiment" appearing in the specification does not refer to a same embodiment. In addition, these particular features, structures, or characteristics may be combined in one or more embodiments by using any appropriate manner. It should be understood that sequence numbers of the foregoing processes do not mean execution sequences in embodiments of the present invention. The execution sequences of the processes should be determined based on functions and internal logic of the processes, and should not be construed as any limitation on the implementation processes of embodiments of the present invention.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

It should be further understood that "first", "second", and various numerical symbols in this specification are merely used for distinguishing for ease of description, and are not intended to limit the scope of embodiments of this application.

It should be understood that the term "and/or" in this specification describes only an association relationship between associated objects and represents that three relationships may exist. For example, A and/or B may represent the following three cases: Only A exists, both A and B exist, and only B exists. When only A or only B exists, a quantity of A or B is not limited. In an example in which only A exists, it may be understood as that there is one or more A.

A person of ordinary skill in the art may be aware that units and algorithm steps described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

An embodiment of this application provides a computer storage medium. The computer storage medium stores a computer program, and the computer program includes instructions used to perform the method corresponding to the network device in the foregoing embodiments.

An embodiment of this application provides a computer storage medium. The computer storage medium stores a computer program, and the computer program includes instructions used to perform the method corresponding to the user equipment in the foregoing embodiments.

An embodiment of this application provides a computer program product including instructions. When the computer program product runs on a computer, the computer is enabled to perform the method corresponding to the network device in the foregoing embodiments.

An embodiment of this application provides a computer program product including instructions. When the computer program product runs on a computer, the computer is enabled to perform the method corresponding to the user equipment in the foregoing embodiments.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel parameter obtaining method, wherein the method comprises:

   sending, by a network device, a precoded reference signal and indication information, wherein the precoded reference signal is generated on P ports by mapping K virtual ports to each of the P ports through beamforming, the K virtual ports are associated with K selected frequency domain bases, the indication information indicates the K selected frequency domain bases, K is an integer greater than 1, and the P ports are precoded reference signal CSI-RS ports of the network device and user equipment; and
   receiving, by the network device, a linear superposition coefficient sent by the user equipment, wherein the linear superposition coefficient corresponds to M frequency domain bases in the K selected frequency domain bases and corresponds to T ports in the P ports, wherein $1 \leq T \leq P$, and $1 \leq M \leq K$.

2. The method according to claim 1, wherein the indication information further indicates T and/or M.

3. The method according to claim 1 or 2, wherein the K frequency domain bases of each port correspond to K angle-delay pairs, and that the precoded reference signal is generated on P ports by mapping K virtual ports to each of the P ports through beamforming comprises:

   obtaining a first weight of each of the K angle-delay pairs in an $n^{th}$ frequency domain unit, wherein the $n^{th}$ frequency domain unit is any one of frequency domain units for sending the precoded reference signal;
   obtaining a space-frequency weight of the $n^{th}$ frequency domain unit on each port based on K first weights and the K frequency domain bases that correspond to each port, so that the K virtual ports are mapped to each port through beamforming; and
   performing precoding based on the space-frequency weight of the $n^{th}$ frequency domain unit and a downlink signal, to obtain the precoded reference signal corresponding to each port.

4. The method according to any one of claims 1 to 3, wherein the receiving a linear superposition coefficient sent by the user equipment comprises:

   receiving the linear superposition coefficients in a port sequence first and then a frequency domain basis sequence; or
   receiving the linear superposition coefficients in a frequency domain basis sequence first and then a port sequence.

5. A channel parameter obtaining method, wherein the method comprises:

   receiving, by user equipment, indication information and a precoded reference signal, wherein the precoded reference signal is generated on P ports by mapping K virtual ports to each of the P ports through beamforming, the K virtual ports are associated with K selected frequency domain bases, K is an integer greater than 1, and the P ports are precoded reference signal CSI-RS ports of a network device and the user equipment;
   obtaining, by the user equipment, a linear superposition coefficient based on the indication information and the precoded reference signal, wherein the linear superposition coefficient corresponds to M frequency domain bases in the K selected frequency domain bases and corresponds to T ports in the P ports, wherein $1 \leq T \leq P$, and $1 \leq M \leq K$; and
   sending, by the user equipment, the linear superposition coefficient to the network device.

6. The method according to claim 5, wherein the method further comprises: determining, by the user equipment, T and/or M based on the indication information.

7. The method according to claim 5 or 6, wherein the obtaining a linear superposition coefficient based on the indication information and the precoded reference signal comprises:

   determining the K selected frequency domain bases based on the indication information, and determining, based on the precoded reference signal, the T ports and the M frequency domain bases corresponding to each port that are for obtaining the linear superposition coefficient;
   obtaining an equivalent channel of each of the T ports that is in the $n^{th}$ frequency domain unit based on the precoded reference signal; and
   obtaining, through calculation based on the equivalent channel and an index of the M frequency domain bases, the linear superposition coefficient on the M frequency domain bases corresponding to each of the T ports.

8. The method according to any one of claims 5 to 7, wherein the sending the linear superposition coefficient to the network device comprises:

   sending the linear superposition coefficients in a port sequence first and then a frequency domain basis sequence; or
sending the linear superposition coefficients in a frequency domain basis sequence first and then a port sequence.

9. The method according to any one of claims 5 to 8, wherein sending the linear superposition coefficient to the network device by sending a codebook specifically comprises:
sending the codebook to the network device, wherein the codebook comprises a port selection matrix W1, a frequency domain matrix $W_f$, and a linear superposition coefficient matrix $\tilde{W}_2$, a dimension corresponding to W1 is P*T, $W_f$ comprises M columns selected from K columns in a discrete Fourier transform DFT matrix, and $\tilde{W}_2$ is a matrix comprising T*M linear superposition coefficients.

10. A communication apparatus, used in a network device, wherein the network device comprises a sending module and a receiving module, wherein

the sending module is configured to send a precoded reference signal and indication information, wherein the precoded reference signal is generated on P ports by mapping K virtual ports to each of the P ports through beamforming, the K virtual ports are associated with K selected frequency domain bases, the indication information indicates the K selected frequency domain bases, K is an integer greater than 1, and the P ports are precoded reference signal CSI-RS ports of the network device and user equipment; and
the receiving module is configured to receive a linear superposition coefficient sent by the user equipment, wherein the linear superposition coefficient corresponds to M frequency domain bases in the K selected frequency domain bases and corresponds to T ports in the P ports, wherein $1 \le T \le P$, and $1 \le M \le K$.

11. The apparatus according to claim 10, wherein the indication information further indicates T and/or M.

12. The apparatus according to claim 10 or 11, wherein the K frequency domain bases of each port correspond to K angle-delay pairs, and the apparatus further comprises a processing module, configured to:

obtain a first weight of each of the K angle-delay pairs in an $n^{th}$ frequency domain unit, wherein the $n^{th}$ frequency domain unit is any one of frequency domain units for sending the precoded reference signal;
obtain a space-frequency weight of the $n^{th}$ frequency domain unit on each port based on K first weights and the K frequency domain bases that correspond to each port, so that the K virtual ports are mapped to each port through beamforming; and
perform precoding based on the space-frequency weight of the $n^{th}$ frequency domain unit and a downlink signal, to obtain the precoded reference signal corresponding to each port.

13. The apparatus according to claim 8 or 9, wherein the receiving module is specifically configured to:

receive the linear superposition coefficients in a port sequence first and then a frequency domain basis sequence; or
receive the linear superposition coefficients in a frequency domain basis sequence first and then a port sequence.

14. A communication apparatus, used in user equipment, wherein the user equipment comprises a receiving module, a processing module, and a sending module, wherein

the receiving module is configured to receive indication information and a precoded reference signal, wherein the precoded reference signal is generated on P ports by mapping K virtual ports to each of the P ports through beamforming, the K virtual ports are associated with K selected frequency domain bases, K is an integer greater than 1, and the P ports are precoded reference signal CSI-RS ports of a network device and the user equipment;
the processing module is configured to obtain a linear superposition coefficient based on the indication information and the precoded reference signal, wherein the linear superposition coefficient corresponds to M frequency domain bases in the K selected frequency domain bases and corresponds to T ports in the P ports, wherein $1 \le T \le P$, and $1 \le M \le K$; and
the sending module is configured to send the linear superposition coefficient to the network device.

15. The method according to claim 14, wherein the processing module is further configured to determine T and/or M based on the indication information.

16. The apparatus according to claim 14 or 15, wherein the processing module is specifically configured to:

determine the K selected frequency domain bases based on the indication information, and determine, based on the precoded reference signal, the T ports and the M frequency domain bases corresponding to each port that are for obtaining the linear superposition coefficient;

obtain an equivalent channel of each of the T ports that is in the $n^{th}$ frequency domain unit based on the precoded reference signal; and obtain, through calculation based on the equivalent channel and an index of the M frequency domain bases, the linear superposition coefficient on the M frequency domain bases corresponding to each of the T ports.

17. The apparatus according to any one of claims 14 to 16, wherein the sending module is specifically configured to:

send the linear superposition coefficients in a port sequence first and then a frequency domain basis sequence; or
send the linear superposition coefficients in a frequency domain basis sequence first and then a port sequence.

18. The apparatus according to any one of claims 14 to 17, wherein the sending module is configured to send the linear superposition coefficient to the network device by sending a codebook, and is specifically configured to:
send the codebook to the network device, wherein the codebook comprises a port selection matrix W1, a frequency domain matrix $W_f$, and a linear superposition coefficient matrix $\tilde{W}_2$, a dimension corresponding to W1 is P*T, $W_f$ comprises M columns selected from K columns in a discrete Fourier transform DFT matrix, and $\tilde{W}_2$ is a matrix comprising T*M linear superposition coefficients.

19. A communication apparatus, wherein the communication apparatus comprises a processor and an interface circuit, the interface circuit is configured to receive code instructions and transmit the code instructions to the processor, and the processor is configured to run the code instructions to perform the method according to any one of claims 1 to 4, or run the code instructions to perform the method according to any one of claims 5 to 9.

20. A readable storage medium, configured to store computer-readable instructions, wherein when the computer-readable instructions are executed, the method according to any one of claims 1 to 4 or the method according to any one of claims 5 to 9 is implemented.

21. A communication system, wherein the system comprises user equipment and a network device, the user equipment comprises the communication apparatus according to claims 10 to 13, and the network device comprises the communication apparatus according to claims 14 to 18.

100

102

103

104

101

105

107

106

FIG. 1

Network device

User equipment

201: Send a precoded reference signal and indication information, where the precoded reference signal is generated on P ports by mapping K virtual ports to each of the P ports through beamforming, the K virtual ports are associated with K selected frequency domain bases, the indication information indicates the K selected frequency domain bases, and K is an integer greater than 1

202: Obtain a linear superposition coefficient based on the indication information and the precoded reference signal

203: Send the linear superposition coefficient

FIG. 2A

1. The network device sends channel measurement configuration information

2. The network device sends a channel measurement pilot

**Network device**

3. The user equipment feeds back CSI based on a pilot measurement result

**User equipment**

4. The network device sends data based on the CSI

FIG. 2B

$H_{UL}$ ⇒

Space domain weight S
Frequency domain weight F

⇒

Space domain weighting

Frequency domain weighting

Resource block 1

Resource block 2

Resource block 3

...

Resource block $N_{sb}$

⇒

$$\hat{c}_p = \sum_{k=1}^{N_{sb}} H_{eq}^{p,k}$$

FIG. 2C

$$\mathbf{a}(\theta_{\kappa}) \times \mathbf{b}(\tau_{\iota})^{H} =$$

$$[\mathbf{a}_1, \mathbf{a}_2, ..., \mathbf{a}_N]^{T} \times [\mathbf{b}_1, \mathbf{b}_2, ..., \mathbf{b}_T] =$$

$$\begin{cases} \mathbf{a}_1\mathbf{b}_1 & \mathbf{a}_1\mathbf{b}_2 & \cdots & \mathbf{a}_1\mathbf{b}_T \\ \mathbf{a}_2\mathbf{b}_1 & \mathbf{a}_2\mathbf{b}_2 & \cdots & \mathbf{a}_2\mathbf{b}_T \\ \vdots & \vdots & \ddots & \vdots \\ \mathbf{a}_N\mathbf{b}_1 & \mathbf{a}_N\mathbf{b}_2 & \cdots & \mathbf{a}_N\mathbf{b}_T \end{cases}$$

FIG. 2D

FIG. 2E

FIG. 2F

300

Communication apparatus

Receiving module 301

Sending module 302

303 Processing module

FIG. 3

400

Communication apparatus

Receiving module 401

Sending module 402

403 Processing module

FIG. 4

Apparatus 500

Processor 510

Transceiver 530

Memory 540

FIG. 5

Antenna

810

Radio frequency circuit

Memory

Processor

820

Input/Output apparatus

FIG. 6

FIG. 7

FIG. 8

FIG. 9

## INTERNATIONAL SEARCH REPORT

| | International application No. |
|---|---|
| | **PCT/CN2021/107349** |

| **A.** | **CLASSIFICATION OF SUBJECT MATTER** |
|---|---|
| | H04L 5/00(2006.01)i |

According to International Patent Classification (IPC) or to both national classification and IPC

| **B.** | **FIELDS SEARCHED** |
|---|---|

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

WPI, EPODOC, CNKI, CNPAT: 信道参数, 预编码参考信号, 指示, 端口, 波束赋形, 映射, 频域基底, 线性叠加系数, 角度时延对; channel parameters, precoding reference signal, indicator, port, beamform, map, frequency domain base, linear superposition coefficient, angle delay pair

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | CN 110855336 A (HUAWEI TECHNOLOGIES CO., LTD.) 28 February 2020 (2020-02-28) description paragraphs [0174]-[0242] | 1-21 |
| A | CN 110324070 A (HUAWEI TECHNOLOGIES CO., LTD. et al.) 11 October 2019 (2019-10-11) entire document | 1-21 |
| A | CN 111342873 A (HUAWEI TECHNOLOGIES CO., LTD.) 26 June 2020 (2020-06-26) entire document | 1-21 |
| A | US 2019349105 A1 (HUAWEI TECHNOLOGIES CO., LTD.) 14 November 2019 (2019-11-14) entire document | 1-21 |
| A | US 2018316405 A1 (CHINA ACADEMY OF TELECOMMUNICATIONS TECHNOLOGY) 01 November 2018 (2018-11-01) entire document | 1-21 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 September 2021** | **18 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/107349**

| Patent document cited in search report | | | Publication date (day/month/year) | Patent family member(s) | | | Publication date (day/month/year) |
|---|---|---|---|---|---|---|---|
| CN | 110855336 | A | 28 February 2020 | WO | 2020038154 | A1 | 27 February 2020 |
| | | | | EP | 3820054 | A1 | 12 May 2021 |
| CN | 110324070 | A | 11 October 2019 | | None | | |
| CN | 111342873 | A | 26 June 2020 | WO | 2020125534 | A1 | 25 June 2020 |
| US | 2019349105 | A1 | 14 November 2019 | WO | 2018137486 | A1 | 02 August 2018 |
| | | | | CN | 108365877 | A | 03 August 2018 |
| | | | | EP | 3567743 | A1 | 13 November 2019 |
| US | 2018316405 | A1 | 01 November 2018 | CN | 106656292 | A | 10 May 2017 |
| | | | | WO | 2017071674 | A1 | 04 May 2017 |
| | | | | EP | 3370348 | A1 | 05 September 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010732208